(19) Europäisches Patentamt
European Patent Office
Office européen des brevets

(11) EP 4 474 851 A1

(12) **EUROPEAN PATENT APPLICATION**
published in accordance with Art. 153(4) EPC

(43) Date of publication:
**11.12.2024 Bulletin 2024/50**

(21) Application number: **23759039.3**

(22) Date of filing: **10.02.2023**

(51) International Patent Classification (IPC):
***G01S 5/02*** *(2010.01)* ***G01S 5/20*** *(2006.01)*

(52) Cooperative Patent Classification (CPC):
**G01S 5/02; G01S 5/20**

(86) International application number:
**PCT/CN2023/075507**

(87) International publication number:
**WO 2023/160414 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 CN 202210190807**

(71) Applicant: **Huawei Technologies Co., Ltd.**
**Shenzhen, Guangdong 518129 (CN)**

(72) Inventors:
- **WANG, Qi**
  **Shenzhen, Guangdong 518129 (CN)**
- **PENG, Lan**
  **Shenzhen, Guangdong 518129 (CN)**
- **DU, Zhenguo**
  **Shenzhen, Guangdong 518129 (CN)**
- **WANG, Liang**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DISTANCE MEASUREMENT METHOD, AND READABLE MEDIUM AND ELECTRONIC DEVICE**

(57) This application relates to the field of communication technologies, and in particular, to a distance measurement method, a readable medium, and an electronic device. The distance measurement method includes: A first electronic device establishes a communication connection to a second electronic device. The first electronic device receives a distance measurement instruction. The first electronic device receives a plurality of groups of sound wave signals sent by a speaker in the second electronic device. Then, the first electronic device determines, based on the plurality of groups of sound wave signals, a sending moment, and a sound wave velocity, a real-time distance between the first electronic device and the second electronic device when each group of sound wave signals are received by the first electronic device. Finally, the first electronic device continuously refreshes and displays the real-time distance between the first electronic device and the second electronic device that is obtained through calculation. The distance measurement method is easy to operate, and improves user experience. Even if the first electronic device moves slightly, the first electronic device can accurately display, in real time, a change in the distance between the first electronic device and the second electronic device. This improves display precision.

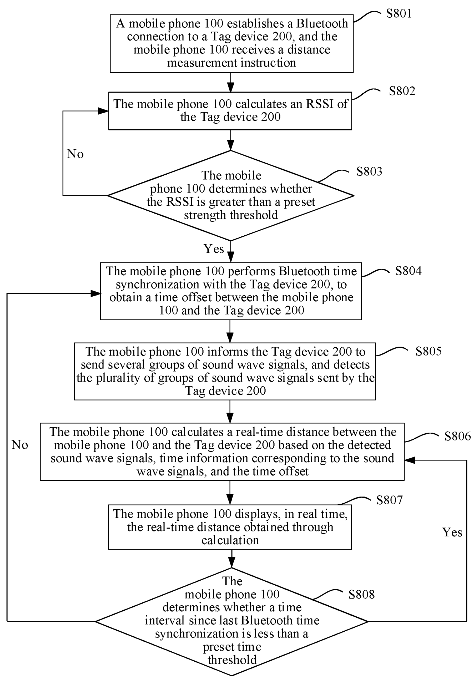

FIG. 8

EP 4 474 851 A1

## Description

This application claims priority to Chinese Patent Application No. 202210190807.0, filed with the China National Intellectual Property Administration on February 28, 2022 and entitled "DISTANCE MEASUREMENT METHOD, READABLE MEDIUM, AND ELECTRONIC DEVICE", which is incorporated herein by reference in its entirety.

## TECHNICAL FIELD

The present invention relates to the field of communication technologies, and in particular, to a distance measurement method, a readable medium, and an electronic device.

## BACKGROUND

A distance is an important parameter that needs to be detected in different scenarios and control. For example, when an electronic device is used to search for another electronic device, a distance and an included angle between the two electronic devices are accurately measured by using a radio carrier (Ultra-wideband, UWB) technology, to notify a user of a specific distance and a specific direction of the another electronic device that is searched for, so that accurate search for the another electronic device is implemented. For another example, when an electronic device performs multi-screen collaboration with another electronic device, for security, the electronic device can perform the multi-screen collaboration only with another electronic device within a short distance range. In this case, a distance between the electronic device and the another electronic device may be measured to determine when to perform the multi-screen collaboration between the electronic device and the another electronic device and when to terminate the multi-screen collaboration between the electronic device and the another electronic device.

## SUMMARY

This application provides a distance measurement method, a readable medium, and an electronic device. The distance measurement method includes: A first electronic device establishes a communication connection to a second electronic device. The first electronic device generates a distance measurement instruction based on a related operation of a user. The first electronic device receives a plurality of groups of sound wave signals sent by a speaker in the second electronic device, and determines a starting band of each group of sound wave signals in the plurality of groups of received sound wave signals through correlation calculation, to determine a receiving moment at which each group of sound wave signals are received by the first electronic device. Then, the first electronic device determines, based on the receiving moment of each group of sound wave signals, a sending moment of each group of sound wave signals, and a sound wave velocity, a real-time distance between the first electronic device and the second electronic device when each group of sound wave signals are received by the first electronic device. Finally, the first electronic device continuously refreshes and displays the real-time distance between the first electronic device and the second electronic device that is obtained through calculation.

In the foregoing distance measurement method, the user performs a related operation on the first electronic device. The second electronic device continuously sends the plurality of groups of sound wave signals, and the first electronic device may determine, based on the plurality of groups of received sound wave signals, an arrival moment corresponding to each group of sound wave signals. The first electronic device may calculate, based on the arrival moment corresponding to each group of sound wave signals, the sending moment corresponding to each group of sound wave signals, and the sound wave velocity, the real-time distance between the first electronic device and the second electronic device when each group of sound wave signals arrive at the first electronic device. Based on this, the first electronic device can continuously refresh the real-time distance between the first electronic device and the second electronic device. The foregoing distance measurement method is easy for the user to operate, and improves user experience. In addition, because a frequency of the sound wave is high, a sending interval between two adjacent groups of sound wave signals may be flexibly adjusted. Therefore, a frequency of refreshing the real-time distance by the first electronic device can be ensured. Even if the user carries the first electronic device to move slightly, the first electronic device can accurately display, in real time, a change in the distance between the first electronic device and the second electronic device.

A first aspect of this application provides a distance measurement method. The method includes: A first electronic device establishes a communication connection to a second electronic device. The first electronic device detects a distance measurement instruction. The first electronic device detects, at a first moment, a first group of sound wave signals sent by the second electronic device, and determines, based on the first group of sound wave signals and first information corresponding to the first group of sound wave signals, a first distance that is between the first electronic device and the second electronic device and that corresponds to the first moment, where the first information includes first sending time information of sending the first group of sound wave signals by the second electronic device. After determining the first distance, the first electronic device displays the first distance. The first electronic device detects, at a second moment after the first moment, a second group of sound wave signals sent by the second electronic device, and determines, based on the second group of sound wave signals and second information corresponding to the second group of sound wave signals, a second distance that is between the first electronic device and the second electronic device and that corresponds to the second moment, where the second information includes second sending time information of sending the second group of sound wave signals by the second electronic device. After determining the second distance, the first electronic device displays the second distance. The first sending time information includes a sending moment at which the second electronic device sends a first group of sound wave signals. The second sending time information includes a sending moment at which the second electronic device sends a second group of sound wave signals. Alternatively, the second sending time information includes a sending moment at which the second electronic device sends a first group of sound wave signals, and a sending interval between the first group of sound wave signals and the second group of sound wave signals sent by the second electronic device. This is not specifically limited in this application.

There are various manners in which the first electronic device establishes the communication connection to the second electronic device. This is not specifically limited in this application. For example, the first electronic device and the second electronic device are connected through Bluetooth. The distance measurement instruction refers to instruction information that is generated by the first electronic device based on a user operation and that indicates the first electronic device to interact with the second electronic device, to obtain a real-time distance between the first electronic device and the second electronic device. It may be understood that, in some implementations, the distance measurement instruction further carries identification information of the second electronic device, so that interaction with the second electronic device can be accurately established when there are a plurality of associated electronic devices around the first electronic device.

The first group of sound wave signals refer to a segment of sound wave signals received by the first electronic device from several groups of sound wave signals sent by the second electronic device. In other words, the second electronic device sends several segments of sound wave signals, and the first electronic device receives, at the first moment, the first group of sound wave signals. The second group of sound wave signals refer to another segment of sound wave signals received by the first electronic device from several groups of sound wave signals sent by the second electronic device. In other words, the second electronic device sends several segments of sound wave signals, and the first electronic device receives, at the second moment, the second group of sound wave signals. It may be understood that, in some implementations of this application, after the first electronic device receives the first group of sound wave signals, the another segment of sound wave signals subsequently received is the second group of sound wave signals. In some other alternative implementations of this application, after receiving the first group of sound wave signals, the first electronic device receives another segment of sound wave signals, and still another segment of sound wave signals subsequently received is the second group of sound wave signals. In other words, the first electronic device further receives another group of sound wave signals between the first group of sound wave signals and the second group of sound wave signals. For example, the first electronic device receives the first group of sound wave signals, a third group of sound wave signals, and the second group of sound wave signals in sequence.

In addition, the first distance that is between the first electronic device and the second electronic device and that corresponds to the first moment is not necessarily determined at the first moment, or is not a distance that is between the first electronic device and the second electronic device and that is displayed at the first moment. The first distance that is between the first electronic device and the second electronic device and that corresponds to the first moment refers to a distance that is between the first electronic device and the second electronic device and that corresponds to the first moment. The first distance may be determined after a short period of delay relative to the first moment, or the first distance may be a distance displayed on the first electronic device after a short period of delay relative to the first moment. The first distance represents a distance between the first electronic device and the second electronic device when the first group of sound wave signals arrive at the first electronic device. Similarly, it may be learned that, because a principle of the second distance between the first electronic device and the second electronic device is similar to that of the first distance, details are not described in this application.

In addition, it should be noted that, in the foregoing implementation, only a manner of determining the first distance and the second distance in the first electronic device and the second electronic device is described. However, in an actual distance measurement manner, the second distance is a plurality of groups of data. In other words, after the first electronic device determines the second distance between the first electronic device and the second electronic device, the first electronic device continues to update the second distance between the first electronic device and the second electronic device, so that the first electronic device continuously displays the distance between the first electronic device and the second electronic device.

In the foregoing distance measurement method, the first electronic device can continuously refresh the real-time distance between the first electronic device and the second electronic device. The foregoing distance measurement method is easy for the user to operate, and improves user experience. In addition, because a frequency of the sound wave is high, a sending interval between two adjacent groups of sound wave signals may be flexibly adjusted. Therefore, a frequency of refreshing the real-time distance by the first electronic device can be ensured. Even if the user carries the first electronic device to move slightly, the first electronic device can accurately display, in real time, a change in the distance between the first electronic device and the second electronic device.

In a possible implementation of the first aspect, in the distance measurement method, the first electronic device receives the first information and the second information from the second electronic device. In other words, the first electronic device receives the first sending time information and the second sending time information from the second electronic device.

In other words, in the possible implementation of this application, the first information and the second information are determined by the second electronic device. The second electronic device can send the first group of sound wave signals based on the first information determined by the second electronic device, and can send the second group of sound wave signals based on the second information. Then, the second electronic device sends the first information and the second information to the first electronic device, so that the first electronic device can determine, based on the received first group of sound wave signals and the first information, the first distance between the first electronic device and the second electronic device when the first group of sound wave signals arrive at the first electronic device, and at a same time, the first electronic device can determine, based on the received second group of sound wave signals and the second information, the second distance between the first electronic device and the second electronic device when the second group of sound wave signals arrive at the first electronic device.

In the foregoing distance measurement method, before the second electronic device sends a first sound wave signal and a second sound wave signal, the second electronic device does not need to receive the first information and the second information from the first electronic device or another electronic device. This can effectively shorten a response time before the second electronic device sends the first sound wave signal and the second sound wave signal, properly arrange response periodicities of the first electronic device and the second electronic device, and further improve user experience.

In a possible implementation of the first aspect, in the distance measurement method, the first electronic device sends the first sending time information and the second sending time information to the second electronic device, so that the second electronic device sends the first group of sound wave signals based on the first sending time information, and the second electronic device sends the second group of sound wave signals based on the second sending time information. The first information includes the first sending time information, and the second information includes the second sending time information.

In other words, in the possible implementation of this application, the first information and the second information are determined by the first electronic device. After determining the first information and the second information, the first electronic device sends the first information and the second information to the second electronic device.

Then, the second electronic device sends the first group of sound wave signals based on the first information, and sends the second group of sound wave signals based on the second information. Then, the first electronic device determines, based on the received first group of sound wave signals and the first information, the first distance between the first electronic device and the second electronic device when the first group of sound wave signals arrive at the first electronic device, and at a same time, the first electronic device can determine, based on the received second group of sound wave signals and the second information, the second distance between the first electronic device and the second electronic device when the second group of sound wave signals arrive at the first electronic device.

In the foregoing distance measurement method, the first electronic device does not need to receive the first information of the first group of sound wave signals and the second information of the second group of sound wave signals from the second electronic device, so that interaction between the first information and the second information between the first electronic device and the second electronic device is reduced, and timeliness and accuracy of the distance measurement method is improved. In addition, the first electronic device may further properly adjust sending time information corresponding to a subsequent group of sound wave signals based on the distance between the first electronic device and the second electronic device that has been determined by the first electronic device.

For example, when a first distance value determined by the first electronic device is small, it indicates that the first electronic device is close to the second electronic device, and the user is about to find the second electronic device. In this case, a sending time interval between the first group of sound wave signals and the second group of sound wave signals may be shortened, in other words, a difference between first time and second time may be reduced, to improve display precision of the distance between the first electronic device and the second electronic device, so that when the first electronic device moves slightly, the first electronic device can also accurately capture a distance difference between the first electronic device and the second electronic device.

For another example, when a first distance value determined by the first electronic device is small, it indicates that the first electronic device is close to the second electronic device, and the user is about to find the second electronic device. In this case, a relative movement speed between the first electronic device and the second electronic device may be slowed down, to improve display precision of the distance between the first electronic device and the second electronic device, so that when the first electronic device moves slightly, the first electronic device can also accurately capture a distance difference between the first electronic device and the second electronic device.

In addition, in a possible implementation of the first aspect, in the distance measurement method, the first information is determined by the first electronic device, the second information is determined by the second electronic device, the first electronic device sends the first information to the second electronic device, and the second electronic device sends the second information to the first electronic device. Alternatively, the second information is determined by the first electronic device, the first information is determined by the second electronic device, the first electronic device sends the second information to the second electronic device, and the second electronic device sends the first information to the first electronic device.

In addition, in a possible implementation of the first aspect, in the distance measurement method, the first information and the second information is determined by a third electronic device, and the first electronic device and the second electronic device obtain the first information and the second information.

It may be understood that any combination of the foregoing implementations falls within the protection scope of this application. This is not specifically limited in this application.

In a possible implementation of the first aspect, the distance measurement method further includes: The first electronic device detects, at a fifth moment, a third group of sound wave signals sent by the second electronic device. The fifth moment is between the first moment and the second moment. Further, the first electronic device determines, based on the first group of sound wave signals, the third group of sound wave signals, the first information, and third information corresponding to the third group of sound wave signals, the first distance that is between the first electronic device and the second electronic device and that is at the first moment. The first electronic device determines, based on the second group of sound wave signals, the third group of sound wave signals, the second information, and the third information, the second distance that is between the first electronic device and the second electronic device and that corresponds to the second moment.

In other words, in the possible implementation of this application, the first electronic device receives the first group of sound wave signals and the third group of sound wave signals at the first moment, and the first electronic device determines, based on the first group of sound wave signals, the third group of sound wave signals, the first information corresponding to the first sound wave signals, and the third information corresponding to the third group of sound wave signals, the first distance that is between the first electronic device and the second electronic device and that corresponds to the first moment. The third information includes third sending time information of sending the third group of sound wave signals by the second electronic device. For example, the third information includes a sending time at which the second electronic device sends the third group of sound wave signals. For another example, the third information includes a sending time at which the second electronic device sends the third group of sound wave signals and a sending interval between the third group of sound wave signals and the first sound wave signal. This is not specifically limited in this application.

In the foregoing distance measurement method, when receiving the plurality of groups of sound wave signals sent by the second electronic device, the first electronic device may determine and display a distance between the first electronic device and the second electronic device based on a preset display frequency. In this way, the first electronic device can properly adjust a display manner of the distance between the first electronic device and the second electronic device based on an actual display requirement. This implements effective display between the first electronic device and the second electronic device, and improves user experience.

In a possible implementation of the first aspect, the distance measurement method further includes: The first electronic device sends a sound emitting instruction to the second electronic device, where the sound emitting instruction indicates the second electronic device to send sound wave signals, and the sound wave signals include the first group of sound wave signals and the second group of sound wave signals.

The sound emitting instruction refers to instruction information that is sent by the first electronic device to the second electronic device, and indicates the second electronic device to start to send the sound wave signal. It may be understood that, the sound emitting instruction may further include parameters such as a sending moment, a sending interval, or a sound wave wavelength (that is, a sound wave frequency band) of the sound wave signal sent by the second electronic device. This is not specifically limited in this application.

In other words, in the possible implementation of this application, after establishing a communication connection to the second electronic device, the first electronic device can send the sound emitting instruction to the second electronic device, so that the second electronic device starts to send the sound wave signal in response to the sound emitting instruction. In the distance measurement method, the first electronic device can control when the second electronic device makes a sound, to avoid that the second electronic device still makes a sound continuously in a scenario in which distance measurement is not required. This improves energy efficiency utilization.

In a possible implementation of the first aspect, in the distance measurement method, the sound emitting instruction indicates the second electronic device to send sound wave signals, and a frequency range of the sound wave signals is a preset frequency range.

In other words, in the possible implementation of this application, the first electronic device is configured to indicate the second electronic device to send a sound wave signal within the preset frequency range. This facilitates the first electronic device to distinguish the sound wave signal of the second electronic device, to avoid confusion with a sound wave signal sent by another electronic device. In addition, this narrows down the frequency range of the sound wave signals, reduces a difficulty in processing the sound wave signal by the first electronic device, and improves efficiency of processing the sound wave signal by the first electronic device.

In a possible implementation of the first aspect, the distance measurement method further includes: The first electronic device establishes a Bluetooth connection to the second electronic device, and when received signal strength of a Bluetooth signal that is sent by the second electronic device and that is received by the first electronic device is greater than a preset strength threshold. The first electronic device starts to detect the sound wave signals sent by the second electronic device. The sound wave signal includes a first sound wave signal and a second sound wave signal.

The received signal strength of the Bluetooth signal represents strength of the Bluetooth signal that is sent by the second electronic device and that is received by the first electronic device, and may also be understood as an association between the first electronic device and the second electronic device in a current state. For example, a larger received signal strength value indicates that the first electronic device is closer to the second electronic device, in other words, the association between the second electronic device and the first electronic device is stronger, stability of the Bluetooth connection between the first electronic device and the second electronic device is higher, and it is easier for the user to search for the second electronic device by using the first electronic device. A smaller received signal strength value indicates that the first electronic device is farther away from the second electronic device, in other words, the association between the second electronic device and the first electronic device may be weaker, and it is more likely that the user cannot search for the second electronic device by using the first electronic device. The preset strength threshold is an approximate value of the received signal strength indication that is determined based on association strength between the first electronic device and the second electronic device. The preset strength threshold is used to determine whether the first electronic device is close to the second electronic device.

In other words, in the possible implementation of this application, when the first electronic device is connected to the second electronic device through Bluetooth, the first electronic device roughly determines a distance degree between the first electronic device and the second electronic device by using the received signal strength of the Bluetooth signal received by the first electronic device from the second electronic device, and when the first electronic device is close to the second electronic device, the first electronic device starts to detect the sound wave signal sent by the second electronic device, where the sound wave signal includes the first sound wave signal and the second sound wave signal.

In the foregoing distance measurement method, when the first electronic device starts to detect the sound wave signal sent by the second electronic device can be determined based on the received signal strength of the Bluetooth signal received by the first electronic device from the second electronic device. This improves effectiveness of determining the distance between the first electronic device and the second electronic device by the first electronic device, and avoids invalid measurement of the distance between the first electronic device and the second electronic device by the first electronic device when Bluetooth connection strength between the first electronic device and the second electronic device is weak.

In a possible implementation of the first aspect, the distance measurement method further includes: The first electronic device performs, at a third moment, Bluetooth time synchronization with the second electronic device, to determine a first time offset that is between the first electronic device and the second electronic device and that corresponds to the third moment. The first electronic device determines, based on the first time offset, the first group of sound wave signals, and the first information, a first distance after the third moment, and the first electronic device determines, based on the first time offset, the second group of sound wave signals, and the second information, a second distance after the third moment.

The Bluetooth time synchronization refers to that a time offset between the first electronic device and the second electronic device is determined by using a Bluetooth module in the first electronic device and a Bluetooth module in the second electronic device. The time offset refers to a deviation of time displayed on the first electronic device and the second electronic device. The first time offset refers to a deviation of time displayed on the first electronic device and the second electronic device after the third moment.

It is not difficult to understand that, the first electronic device and the second electronic device each have a clock, and therefore, time corresponding to the first electronic device and time corresponding to the second electronic device can be separately obtained by statistics. However, in some cases, due to a setting error or a structural error, the time corresponding to the first electronic device may be inconsistent with the time corresponding to the second electronic device, and the inconsistency may be reduced through the Bluetooth time synchronization. A specific implementation of obtaining the time offset between the first electronic device and the second electronic device during the Bluetooth time synchronization is described in detail in the following, and details are not described herein again. In addition, the third moment is only used to distinguish between the first moment and the second moment, and does not represent a sequence relationship. In some implementations, the third moment is before the first moment. In another alternative implementation, the third moment is after the first moment. For example, the third moment is between the first moment and the second moment. This is not specifically limited in this application.

In the foregoing distance measurement method, the time offset between the first electronic device and the second electronic device is comprehensively considered, so that a measurement result error caused by inconsistent display time of the first electronic device and the second electronic device in distance measurement calculation can be reduced, and accuracy of a measured distance between the first electronic device and the second electronic device can be improved.

In a possible implementation of the first aspect, the distance measurement method further includes: The first electronic device performs, at a fourth moment after preset duration of the third moment, Bluetooth time synchronization with the second electronic device, to determine a second time offset that is between the first electronic device and the second electronic device and that corresponds to the fourth moment. The first electronic device determines, based on the second time offset, the first group of sound wave signals, and the first information, a first distance after the fourth moment, and the first electronic device determines, based on the second time offset, the second group of sound wave signals, and the second information, a second distance after the fourth moment.

The second time offset refers to a deviation of time displayed on the first electronic device and the second electronic device after the fourth moment. The fourth moment is after the third moment. In addition, the fourth moment is only used to distinguish the first moment, the second moment, and the third moment, and does not represent a sequence relationship between the fourth moment and the first moment and between the fourth moment and the second moment. In some implementations, the fourth moment is after the first moment and the second moment. In another alternative implementation, the fourth moment is after the second moment. This is not specifically limited in this application.

In a possible implementation of the first aspect, a time interval between the third moment and the fourth moment is a fixed value. For example, the time interval between the third moment and the fourth moment is a preset time threshold. In other words, each time after the preset time threshold is reached, the first electronic device and the second electronic device perform Bluetooth time synchronization.

In the foregoing distance measurement method, when the first electronic device and the second electronic device restart Bluetooth time synchronization at the fourth moment, after the Bluetooth time synchronization ends, an updated time offset is obtained, and the real-time distance calculation formula is updated. Based on this, when the first electronic device and the second electronic device periodically perform Bluetooth time synchronization, so that time drift (that is, the time offset) between the first electronic device and the second electronic device may be corrected. This ensures accuracy of a distance measurement result.

In a possible implementation of the first aspect, the distance measurement method further includes: The first electronic device detects the distance measurement instruction when the first electronic device detects a distance measurement operation performed by the user on the first electronic device and the second electronic device and/or a search operation performed by the user on the second electronic device.

In a possible implementation of the first aspect, in the distance measurement method, a frequency range of the sound wave signals is 20 Hz to $2*10^4$ Hz. Alternatively, a frequency range of the sound wave signals is $2*10^4$ Hz to $10^{12}$ Hz. Alternatively, a frequency range of the sound wave signals is 20 Hz to $10^{12}$ Hz. For example, the frequency range of the sound wave signals is $1.8*10^4$ Hz to $2.2*10^4$ Hz.

A second aspect of this application provides an electronic device. The electronic device includes a memory, configured to store instructions; and one or more processors. When the instructions are executed by the one or more processors, the processor performs the distance measurement method according to any one of the first aspect or the possible implementations of the first aspect.

A third aspect of this application provides a computer-readable storage medium. The computer-readable storage medium stores instructions, and when the instructions are executed on an electronic device, the electronic device is enabled to perform the distance measurement method according to any one of the first aspect or the possible implementations of the first aspect.

A fourth aspect of this application provides a computer program product. The computer program product includes instructions, and when the instructions are executed by one or more processors, the instructions are used to implement the distance measurement method according to any one of the first aspect or the possible implementations of the first aspect.

## BRIEF DESCRIPTION OF DRAWINGS

FIG. 1(a) shows some application scenarios to which a distance measurement method according to this application is applicable;

FIG. 1(b) shows some other application scenarios to which a distance measurement method according to this application is applicable;

FIG. 2 shows a search scenario to which a distance measurement method is applicable according to some embodiments of this application;

FIG. 3(a) shows a home screen of a mobile phone 100 applicable to a distance measurement method according to some embodiments of this application;

FIG. 3(b) shows an operation interface of a mobile phone 100 applicable to a distance measurement method according to some embodiments of this application;

FIG. 4 is a diagram of distance measurement between a mobile phone 100 and a Tag device 200 according to some embodiments of this application;

FIG. 5(a) shows a distance $d_1$ between a mobile phone 100 and a Tag device 200 at a moment $t_{31}$;

FIG. 5(b) shows a distance $d_2$ between a mobile phone 100 and a Tag device 200 at a moment $t_{32}$;

FIG. 5(c) shows a distance $d_3$ between a mobile phone 100 and a Tag device 200 at a moment $t_{33}$;

FIG. 6 is a diagram of a structure of a mobile phone 100 and a Tag device 200 according to some embodiments of this application;

FIG. 7 is a diagram of a specific structure of a mobile phone 100 and a Tag device 200 according to some implementations of this application;

FIG. 8 is a flowchart of a distance measurement method according to some embodiments of this application;

FIG. 9 is a diagram of Bluetooth time synchronization in a distance measurement method according to some embodiments of this application;

FIG. 10(a) is a diagram of a distance measurement method according to some embodiments of this application, where first information includes a sending moment of a sound wave signal, and second information includes a sending moment of a second group of sound wave signals;

FIG. 10(b) is a diagram of a distance measurement method according to some embodiments of this application, where first information includes a sending moment of a sound wave signal, and second information includes a sending interval between a second group of sound wave signals and a first group of sound wave signals;

FIG. 10(c) is a diagram of a distance measurement method according to some embodiments of this application, where first information includes a sending moment of a sound wave signal, and second information includes a sending interval between a second group of sound wave signals and a first group of sound wave signals, where the sending interval is a fixed value;

FIG. 11A and FIG. 11B are an interaction diagram corresponding to the distance measurement method in FIG. 8 according to some embodiments of this application;

FIG. 12 is a flowchart of a distance measurement method according to some embodiments of this application;

FIG. 13A and FIG. 13B are an interaction diagram corresponding to the distance measurement method in FIG. 12 according to some embodiments of this application;

FIG. 14 is a flowchart of a distance measurement method according to some embodiments of this application;

FIG. 15A and FIG. 15B are an interaction diagram corresponding to the distance measurement method in FIG. 14 according to some embodiments of this application;

FIG. 16 is a diagram of a hardware structure of a mobile phone 100 according to this application;

FIG. 17 is a diagram of a structure of a notebook computer 400 according to this application; and

FIG. 18 is an architectural diagram of a mobile phone 100 according to some embodiments of this application.

Reference numerals: 100-Mobile phone; 101-Communication module; 101a-Bluetooth module; 102-Audio module; 102a-Microphone; 103-Processor; 104-Memory; 105-Display module; 200-Tag device; 201-Communication module; 201a-Bluetooth module; 202-Audio module; 202a-Speaker; 203-Processor; 204-Memory; and 205-Display module.

## DESCRIPTION OF EMBODIMENTS

Illustrative embodiments of this application include but are not limited to a distance measurement method, an apparatus, a readable medium, and an electronic device.

To make the objectives, technical solutions, and advantages of this application clearer, the following further describes implementations of this application in detail with reference to the accompanying drawings.

A measurement system applicable to the distance measurement method in this application includes a first electronic device (for example, a mobile phone 100 in FIG. 1(a) or FIG. 1(b)) and a second electronic device (for example, an electronic tag (Tag) device 200 in FIG. 1(a) or a watch 300 in FIG. 1(b)), and the distance measurement solution can be applied to a plurality of scenarios.

In some application scenarios, for example, as shown in FIG. 1(a), the distance measurement method provided in this application may be applied to an application scenario in which a user searches for the Tag device 200 by using the mobile phone 100, to find an item such as a backpack, a bicycle, or a key. The Tag device 200 is an electronic tag device indicating an item, and generally includes a Bluetooth module and a speaker. Specifically, to facilitate searching for an item, such as the backpack, the bicycle, or the key, that cannot be directly identified by an electronic device, the Tag device 200 is generally added to this type of item. When the user wants to know a specific location of the backpack, the bicycle, or the key, the user operates the mobile phone 100 to connect to the Tag device 200 through Bluetooth, and determines a distance between the mobile phone 100 and the Tag device 200 by receiving a sound wave sent by a speaker in the Tag device 200, to provide a reference for the user to search for the item such as the backpack, the bicycle, or the key, and reduce a search difficulty for the user.

In some other application scenarios, for another example, as shown in FIG. 1(b), the distance measurement method provided in this application may alternatively be applied to an application scenario in which the mobile phone 100 and the watch 300 are paired and interacted. For example, in multi-screen collaboration, for security, the multi-screen collaboration can be performed only when a distance between the mobile phone 100 and the watch 300 is within a specific range. When a user wants to implement the multi-screen collaboration between the mobile phone 100 and the watch 300, the user may determine, by measuring the distance between the mobile phone 100 and the watch 300, when to perform the multi-screen collaboration between the mobile phone 100 and the watch 300 and when to terminate the multi-screen collaboration between the mobile phone 100 and the watch 300, to accurately determine a multi-screen collaboration condition, and improve multi-screen collaboration security.

To better understand the technical solutions of embodiments of this application, the following describes the technical solutions of this application in detail by using an application scenario in which a user searches for a Tag device 200 by using a mobile phone 100 as an example.

As shown in FIG. 2, when the user wants to search for the Tag device 200 by using the mobile phone 100, the user may perform a first search operation for the Tag device 200 on the mobile phone 100 (for example, tap/click a search button corresponding to the Tag device 200), to obtain a first distance $d_1$ between the mobile phone 100 and the Tag device 200 at a moment $t_{01}$, and present the first distance $d_1$ to the user, so that the user can adjust a location of the mobile phone 100 based on the first distance $d_1$. Then, the user needs to perform a second search operation for the Tag device 200 on the mobile phone 100 (for example, tap/click a search button corresponding to the Tag device 200 for a second time), to obtain a second distance $d_2$ between the mobile phone 100 and the Tag device 200 at a moment $t_{02}$, and present the second distance $d_2$ to the user, so that the user can continue to adjust the location of the mobile phone 100 based on the first distance $d_1$ and the second distance $d_2$, until a distance $d_3$ between the mobile phone 100 and the Tag device 200 meets a requirement, for example, the user finds the Tag device 200.

It can be learned that, in the application scenario shown in FIG. 2, when the mobile phone 100 displays a real-time distance between the mobile phone 100 and the Tag device 200, it is easier to find the Tag device 200 by using the mobile phone 100. However, in a current distance measurement method, a distance between the mobile phone 100 and the Tag device 200 can be measured at a moment only after the user performs a search operation each time. Therefore, the user needs to operate the mobile phone 100 for a plurality of times to measure the distance between the mobile phone 100 and the Tag device 200 for a plurality of times at a plurality of moments. In this case, the operation is complex, and user experience is poor. In addition, in the current distance measurement method, the distance between the mobile phone 100 and the Tag device 200 cannot be refreshed in time when the mobile phone 100 moves relative to the Tag device 200, in other words, a reference cannot be provided for the user in time. Consequently, it is difficult for the user to search for the Tag device 200 by using the mobile phone 100, and search efficiency is low.

Therefore, an embodiment of this application provides a distance measurement method between electronic devices. As shown in FIG. 3(a) to FIG. 5(c), after a mobile phone 100 establishes a wireless communication connection to a Tag device 200, a user performs a search operation for the Tag device 200 on the mobile phone 100. For example, the search operation may include a start operation of starting a search program in FIG. 3(a) and a search confirmation operation for the Tag device 200 in FIG. 3(b). Then, the mobile phone 100 receives a plurality of groups of sound wave signals sent by a speaker in the Tag device 200, and determines a starting band of each group of sound wave signals in the plurality of groups of received sound wave signals through correlation calculation, to determine a receiving moment (for example, $t_{21}$, $t_{22}$, $t_{23}$, and $t_{2k}$ in FIG. 4) at which each group of sound wave signals are received by the mobile phone 100. Then, the mobile phone 100 determines, based on the receiving moment (for example, $t_{21}$, $t_{22}$, $t_{23}$, and $t_{2k}$ in FIG. 4) of each group of sound wave signals, a sending moment (for example, $t_{11}$, $t_{12}$, $t_{13}$, and $t_{1k}$ in FIG. 4) of each group of sound wave signals, and a sound wave velocity (for example, v in FIG. 4), a real-time distance (for example, $d_1$, $d_2$, $d_3$, and $d_k$ in FIG. 4) between the mobile phone 100 and the Tag device 200 when each group of sound wave signals are received by the mobile phone 100. Finally, the mobile phone 100 continuously refreshes and displays the real-time distance between the mobile phone 100 and the Tag device 200 that is obtained through calculation. For example, as shown in FIG. 5(a), the mobile phone 100 displays "5.3 m away from a Tag device" at a moment $t_{01}$. For another example, as shown in FIG. 5(b), the mobile phone 100 displays "5.7 m away from a Tag device" at a moment $t_{02}$. For another example, as shown in FIG. 5(c), the mobile phone 100 displays "4.9 m away from a Tag device" at a moment $t_{03}$.

In the foregoing distance measurement method, the user performs the search operation on the mobile phone 100 once, the Tag device 200 continuously sends the plurality of groups of sound wave signals, and the mobile phone 100 may determine, based on the plurality of groups of received sound wave signals, an arrival moment corresponding to each group of sound wave signals. The mobile phone 100 may calculate, based on the arrival moment corresponding to each group of sound wave signals, the sending moment corresponding to each group of sound wave signals, and the sound wave velocity, the real-time distance between the mobile phone 100 and the Tag device 200 when each group of sound wave signals arrive at the mobile phone 100. Based on this, the mobile phone 100 can continuously refresh the real-time distance between the mobile phone 100 and the Tag device 200. The distance measurement method is easy for the user to operate, and improves user experience. In addition, because a frequency of the sound wave is high, a sending interval between two adjacent groups of sound wave signals may be flexibly adjusted. Therefore, a frequency of refreshing the real-time distance by the mobile phone 100 can be ensured. Even if the user carries the mobile phone 100 to move slightly, the mobile phone 100 can accurately display, in real time, a change in the distance between the mobile phone 100 and the Tag device 200, so that the user can adjust a solution of searching for the Tag device 200 in time. This reduces a difficulty in searching for the Tag device 200 by the user.

It may be understood that, in addition to the mobile phone 100, the first electronic device mentioned above in this application may be any portable and mobile electronic device, such as a watch, a tablet computer, a notebook computer, a Tag device, a laptop computer, a wearable device, a head-mounted display, a portable game console, a portable music player, or a reader device. In addition to the Tag device 200, the second electronic device may also be any portable and mobile electronic device, such as a mobile phone, a watch, a tablet computer, a notebook computer, a laptop computer, a wearable device, a head-mounted display, a portable game console, a portable music player, or a reader device. In addition, example embodiments of the first electronic device and the second electronic device include but are not limited to various electronic devices running a Linux operating system, an operating system (Windows) developed by Microsoft, a mobile operating system (iOS) developed by Apple, an Android (Android) open-source operating system, a Harmony operating system (HUAWEI Harmony OS), or another operating system. This is not specifically limited in this application.

For ease of description, the following continues to describe in detail the distance measurement method in this application with reference to FIG. 3 and FIG. 4 by using an example in which the first electronic device is the mobile phone 100 and the second electronic device is the Tag device 200.

FIG. 6 is a diagram of a structure of a mobile phone 100 and a Tag device 200 according to some embodiments of this application. As shown in FIG. 6, in some embodiments of this application, the mobile phone 100 includes a communication module 101, an audio module 102, a processor 103, a memory 104, and a display module 105. The Tag device 200 includes a communication module 201 and an audio module 202. The communication module 101, the audio module 102, the processor 103, and the display module 105 are connected through a bus, to implement data exchange. The communication module 201 establishes signal connection to the audio module 202, to implement data exchange. The communication module 101 and the communication module 201 are configured to establish a communication connection between the mobile phone 100 and the Tag device 200. For example, the communication module 101 and the communication module 201 may be Bluetooth modules. The audio module 102 and the audio module 202 are configured to send and/or receive a sound wave signal. For example, the audio module 102 may be a microphone, and the audio module 202 may be a speaker. The processor 103 may invoke a related instruction to control the audio module 101 and the audio module 202 to perform a distance measurement method in this application, and can further obtain a real-time distance between the mobile phone 100 and the Tag device 200 based on an execution result of the audio module 101 and the audio module 202. For example, the processor 103 may be a processing chip integrated in the mobile phone 100. The memory 104 is configured to store a distance measurement-related instruction and data such as a plurality of groups of received sound wave signals. The display module 105 is configured to display a real-time distance obtained by the processor 103. For example, the display module 105 may be a display or a loudspeaker. A display manner of the real-time distance is not specifically limited in this application.

In some other embodiments of this application, the mobile phone 100 includes a communication module 101, an audio module 102, a processor 103, a memory 104, and a display module 105. The Tag device 200 includes a communication module 201, an audio module 202, a processor 203, and a memory 204. The communication module 101, the audio module 102, the processor 103, the memory 104, the display module 105, the communication module 201, and the audio module 202 are the same as those in the foregoing embodiments, and details are not described herein again. The processor 203 is configured to obtain a sending moment corresponding to each group of sound wave signals through processing based on a related instruction, and the memory 204 is configured to store a distance measurement-related instruction and the sending moment corresponding to each group of sound wave signals. For example, the processor 203 may be a processing chip integrated in the Tag device 200.

In some other embodiments of this application, the mobile phone 100 includes a communication module 101, an audio module 102, and a display module 105. The Tag device 200 includes a communication module 201, an audio module 202, a processor 203, and a memory 204. The communication module 101, the audio module 102, the display module 105, the communication module 201, and the audio module 202 are the same as those in the foregoing embodiments, and details are not described herein again. The processor 203 is not only configured to obtain a sending moment corresponding to each group of sound wave signals through processing based on a related instruction, but also configured to obtain a real-time distance between the mobile phone 100 and the Tag device 200 through processing based on the related instruction. The memory 204 is configured to store an instruction related to distance measurement, the sending moment corresponding to each group of sound wave signals, and the real-time distance between the mobile phone 100 and the Tag device 200.

FIG. 7 is a diagram of a specific structure of a mobile phone 100 and a Tag device 200 according to some embodiments of this application.

As shown in FIG. 7, the mobile phone 100 includes a Bluetooth module 101a, a microphone 102a, a processor 103, a memory 104, and a display module 105. The Tag device 200 includes a Bluetooth module 201a and a speaker 202a. The mobile phone 100 establishes a communication connection to the Tag device 200 by using the Bluetooth module 101a and the Bluetooth module 201a, to transmit data and an instruction between the mobile phone 100 and the Tag device 200. The Tag device 200 sends a sound wave signal through the speaker 202a, and the mobile phone 100 receives and collects the sound wave signal through the microphone 102a.

It may be understood that, the sound wave signal sent by the speaker 202a and the sound wave signal received by the microphone 102a are not specifically limited in this application, provided that it is ensured that a frequency band of the sound wave signal sent by the speaker 202a is within a frequency band range that can be received by the microphone 210a. For example, in some implementations of this application, the Tag device 200 may send an ultrasonic signal through the speaker 202a, and the mobile phone 100 can receive and collect the ultrasonic signal through the microphone 102a. In the measurement method, a mobile phone, a tablet computer, and a notebook computer are all equipped with a microphone and a speaker, and a Tag device is equipped with a speaker. A distance between any one of items such as the mobile phone, the tablet computer, and the notebook computer and the Tag device, and between any two of the mobile phone, the tablet computer, and the notebook computer can be measured by using an ultrasonic wave. In this case, an application scope of this application is expanded, hardware costs are reduced, and economic benefits are improved.

The following describes in detail a measurement solution of a measurement system provided in this application with reference to specific embodiments.

FIG. 8 is a flowchart of a distance measurement method according to some embodiments of this application. The following describes the distance measurement method provided in this application with reference to FIG. 8. Specifically, as shown in FIG. 8, the distance measurement method provided in this application includes the following steps.

Step S801: A mobile phone 100 establishes a Bluetooth connection to a Tag device 200, and the mobile phone 100 receives a distance measurement instruction.

In this application, when a user wants to search for the Tag device 200 by using the mobile phone 100, the user may perform a search operation (for example, the foregoing related descriptions of the user operations in FIG. 3(a) and FIG. 3(b)) for the Tag device 200 on the mobile phone 100. The mobile phone 100 receives the distance measurement instruction generated based on the search operation. The distance measurement instruction refers to instruction information that is generated by the mobile phone 100 based on a user operation and that indicates the mobile phone 100 to interact with the Tag device 200, to obtain a real-time distance between the mobile phone 100 and the Tag device 200. In some implementations, the distance measurement instruction further carries identification information of the Tag device 200, so that interaction with the Tag device 200 can be accurately established when there are a plurality of associated electronic devices around the mobile phone 100.

In addition, the mobile phone 100 establishes the Bluetooth connection to the Tag device 200 based on the distance measurement instruction. Certainly, it is not difficult to understand that the mobile phone 100 may also implement a communication connection between the mobile phone 100 and the Tag device 200 in another manner, for example, establish a communication connection between the mobile phone 100 and the Tag device 200 in a manner such as a near-field (Nearby) module or near-field communication (near-field communication, NFC). However, it should be noted that, because the user (that is, the mobile phone 100) does not know a specific location of the Tag device 200, only a wireless communication connection can be performed between the mobile phone 100 and the Tag device 200. Based on this, any manner in which the wireless communication connection between the mobile phone 100 and the Tag device 200 can be implemented falls within the protection scope of this application. This is not specifically limited in this application.

In some implementations of this application, the mobile phone 100 establishes a communication connection to the Tag device 200, and then the mobile phone 100 generates a distance measurement instruction based on a touch operation of the user. In some other alternative implementations of this application, the mobile phone 100 generates a distance measurement instruction based on a touch operation of the user, and a first electronic device establishes a communication connection to a second electronic device. In some other alternative implementations of this application, a first electronic device establishes a communication connection to a second electronic device, and the mobile phone 100 generates a distance measurement instruction based on a touch operation of the user at a same time. In other words, in this application, a sequence in which the first electronic device establishes the communication connection to the second electronic device, and the mobile phone 100 receives the distance measurement instruction is not specifically limited in this application.

Step S802: The mobile phone 100 calculates an RSSI of the Tag device 200.

In this application, a Bluetooth module 101a in the mobile phone 100 calculates, based on a Bluetooth signal received from a Bluetooth module 201a in the Tag device 200, the RSSI corresponding to the Tag device 200. The RSSI refers to a received signal strength indication (Received Signal Strength Indication, RSSI) obtained based on the received Bluetooth signal. The RSSI represents strength of the Bluetooth signal that is sent by the Tag device 200 and received by the mobile phone 100, and may also be understood as an association between the mobile phone 100 and the Tag device 200 in a current state.

For example, a larger RSSI value indicates that the mobile phone 100 is closer to the Tag device 200, in other words, the association between the Tag device 200 and the mobile phone 100 is stronger, stability of the Bluetooth connection between the mobile phone 100 and the Tag device 200 is higher, and it is easier for the user to search for the Tag device 200 by using the mobile phone 100. A smaller RSSI value indicates that the mobile phone 100 is farther away from the Tag device 200, in other words, the association between the Tag device 200 and the mobile phone 100 may be weaker, and it is more likely that the user cannot search for the Tag device 200 by using the mobile phone 100.

Step S803: The mobile phone 100 determines whether the RSSI of the Tag device 200 is greater than a preset strength threshold.

If the RSSI of the Tag device 200 is greater than the preset strength threshold, it indicates that the strength of the Bluetooth signal received by the Bluetooth module 101a is strong, in other words, the Bluetooth module 101a is close to the Bluetooth module 201a, which means that the mobile phone 100 is close to the Tag device 200. Therefore, it is necessary to further determine a distance between the mobile phone 100 and the Tag device 200, and step S804 is performed. If the RSSI of the Tag device 200 is not greater than the preset strength threshold, it indicates that the strength of the Bluetooth signal received by the Bluetooth module 101a is weak, in other words, the Bluetooth module 101a is far away from the Bluetooth module 201a, and even may cause inaccurate distance measurement. In this case, return to step S802.

In this application, after obtaining the RSSI, the mobile phone 100 determines whether the RSSI is greater than the preset strength threshold. The preset strength threshold is an approximate value of the received signal strength indication that is determined based on association strength between the mobile phone 100 and the Tag device 200. The preset strength threshold is used to determine whether the mobile phone 100 is close to the Tag device 200.

Step S804: The mobile phone 100 performs Bluetooth time synchronization with the Tag device 200, to obtain a time offset between the mobile phone 100 and the Tag device 200.

The Bluetooth time synchronization refers to that the time offset between the mobile phone 100 and the Tag device 200 is determined by using the Bluetooth module 101a in the mobile phone 100 and the Bluetooth module 201a in the Tag device 200. The time offset refers to a deviation of time displayed on the mobile phone 100 and the Tag device 200. It is not difficult to understand that, the mobile phone 100 and the Tag device 200 each have a clock, and therefore, time corresponding to the mobile phone 100 and time corresponding to the Tag device 200 can be separately obtained by statistics. However, in some cases, due to a setting error or a structural error, the time corresponding to the mobile phone 100 may be inconsistent with the time corresponding to the Tag device 200. To reduce a distance error in distance measurement calculation caused by such inconsistency, in some embodiments of this application, the time offset between the mobile phone 100 and the Tag device 200 further needs to be measured.

In some embodiments of this application, the time offset may be $\Delta=T_T-T_P$, where $\Delta$ represents a time offset between the mobile phone 100 and the Tag device 200, a positive value represents that time corresponding to the Tag device 200 is earlier than time corresponding to the mobile phone 100, a negative value represents that time corresponding to the Tag device 200 is later than time corresponding to the mobile phone 100, $T_T$ represents time corresponding to the Tag device 200 at a predetermined moment, and $T_P$ represents time corresponding to the mobile phone 100 at the predetermined moment.

In addition, because a transmission speed of an electromagnetic wave is approximately $3\times10^8$ m/s, when the mobile phone 100 is close to the Tag device 200, transmission time is approximately 0. Based on this, when a group of electromagnetic waves are transmitted between the mobile phone 100 and the Tag device 200 for a single time, a sending moment and an arrival moment of the electromagnetic waves approximately represent the time offset between the mobile phone 100 and the Tag device 200. That is, $T_{P1}\approx T_{T1}-\Delta_1$, where $\Delta_1$ is a time offset corresponding to a first group, $T_{P1}$ represents a departure moment at which the electromagnetic waves depart from the mobile phone 100 or an arrival moment at which the electromagnetic waves arrive at the mobile phone 100, and $T_{T1}$ represents a departure moment at which the electromagnetic waves depart from the Tag device 200 or an arrival moment at which the electromagnetic waves arrive at the Tag device 200. Similarly, $T_{Pi} \approx T_{Ti} - \Delta_i$, where a value range of i is 1 to k, which is not specifically limited in this application, $\Delta_i$ is a time offset corresponding to an $i^{th}$ group, $T_{Pi}$ represents a departure moment at which the electromagnetic waves depart from the mobile phone 100 or an arrival moment at which the electromagnetic waves arrive at the mobile phone 100, and $T_{Ti}$ represents a departure moment at which the electromagnetic waves depart from the Tag device 200 or an arrival moment at which the electromagnetic waves arrive at the Tag device 200.

The following describes a Bluetooth time synchronization manner in this application in detail with reference to FIG. 9. It may be understood that, because a time offset Δ of each transmission cycle is affected by system scheduling, to reduce an error, a method of performing the time synchronization for a plurality of times and obtaining an average value may be used to reduce impact of the system scheduling on the time offset Δ. In some embodiments of this application, the mobile phone 100 first sends a Bluetooth time synchronization signal SEQ1 to the Tag device 200 at a moment $T_{P1}$, and the Tag device 200 receives the Bluetooth time synchronization signal SEQ1 at a moment $T_{T1}$. $T_{P1}$ is time recorded by a local clock of the mobile phone 100, and $T_{T1}$ is time recorded by a local clock of the Tag device 200, that is, $\Delta_1 \approx T_{T1} - T_{P1}$, where $\Delta_1$ is a time offset obtained through first measurement. After receiving the Bluetooth time synchronization signal SEQ1, the Tag device 200 sends a Bluetooth time synchronization signal SEQ2 to the mobile phone 100 at a moment $T_{T2}$, and the mobile phone 100 receives the Bluetooth time synchronization signal SEQ2 at a moment $T_{P2}$. $T_{P2}$ is time recorded by the local clock of the mobile phone 100, and $T_{T2}$ is time recorded by the local clock of the Tag device 200, that is, $\Delta_2 \approx T_{T2} - T_{P2}$. By analogy, $T_{P2n}$ is time recorded by the local clock of the mobile phone 100, and $T_{T2n}$ is time recorded by the local clock of the Tag device 200, that is, $\Delta_{2n} \approx T_{T2n} - T_{P2n}$.

Based on this, it may be obtained that after 2n times, an average value of time offsets is

$$\Delta = \frac{1}{2n} \sum_{i=1}^{2n} \Delta_i$$

.

It is not difficult to find that after $\Delta_1$, $\Delta_2$, $\Delta_3$, ..., $\Delta_{2n-1}$, and $\Delta_{2n}$ are respectively expanded, the following formula (1) is obtained:

$$\Delta = \frac{\sum_{i=1}^{n} [(T_{T(2i-1)} - T_{P(2i-1)}) + (T_{T2i} - T_{P2i})]}{2n} \quad (1)$$

After transformation, the following formula (2) is obtained:

$$\Delta = \frac{\sum_{i=1}^{n} [(T_{T(2i-1)} + T_{T2i}) - (T_{P(2i-1)} + T_{P2i})]}{2n} \quad (2)$$

After transformation, the following formula (3) is obtained:

$$\Delta = \frac{\sum_{i=1}^{n} (T_{T(2i-1)} + T_{T2i})}{2n} - \frac{\sum_{i=1}^{n} (T_{P(2i-1)} + T_{P2i})}{2n} \quad (3)$$

In some implementations, each time when sending the SEQ signal, the Tag device 200 may feed back, to the mobile phone 100, a receiving moment $T_{T(2i-1)}$ and a sending moment $T_{T2i}$ corresponding to the Bluetooth time synchronization signal whose receiving moment is $T_{T(2i-1)}$. After receiving data, the mobile phone 100 obtains the time offset Δ through calculation based on the formula (3).

In some other implementations, because a left part in the formula (3) (that is, the formula (4)) relates only to the receiving moment and the sending moment of the Tag device 200, an average value of the receiving moment and the sending moment may be first calculated by using the formula (4), and then the average value is fed back to the mobile phone 100 through Bluetooth for a single time.

$$\frac{\sum_{i=1}^{n} (T_{T(2i-1)} + T_{T2i})}{2n} \quad (4)$$

Step S805: The mobile phone 100 informs the Tag device 200 to send several groups of sound wave signals, and detects the plurality of groups of sound wave signals sent by the Tag device 200.

In this application, the mobile phone 100 generates a sound emitting instruction informing the Tag device 200 to start to send the sound wave signals, and sends the sound emitting instruction to the Tag device 200. The Tag device 200 continuously sends the several groups of sound wave signals in response to the sound emitting instruction. The mobile phone 100 can continuously receive the plurality of groups of sound wave signals. The sound emitting instruction refers to instruction information that is sent by the mobile phone 100 to the Tag device 200 and indicates the Tag device 200 to start to send the sound wave signal. It may be understood that, the sound emitting instruction may further include parameters such as a sending moment, a sending interval, or a sound wave wavelength (that is, a sound wave frequency band) of the sound wave signal sent by the Tag device 200, which are described in detail in the following, and the concept of the sound emitting instruction is not described in detail below.

In some application scenarios, the Tag device 200 sends the sound wave signal in a use state, and the Tag device 200 does not send the sound wave signal in a natural state. In some embodiments of this application, before the mobile phone 100 establishes the communication connection to the Tag device 200, and the mobile phone 100 receives the distance measurement instruction, the Tag device 200 further needs to be bound to a related application of the mobile phone 100. Based on this, after the mobile phone 100 establishes the communication connection to the Tag device 200, and the mobile phone 100 receives the distance measurement instruction, the mobile phone 100 may send a sound wave signal sending request to the Tag device 200, so that the Tag device 200 sends sound wave signal, and a device other than the Tag device 200 does not send a sound wave signal. Based on this, the method can avoid that the mobile phone 100 receives the sound wave signal sent by a device other than the Tag device 200, reduce a processing difficulty of the mobile phone 100, improve processing efficiency of the mobile phone 100, improve a response speed of the mobile phone 100, and further improve user experience.

In some other application scenarios, the Tag device 200 sends the sound wave signal in a use state, and the Tag device 200 also sends the sound wave signal in a natural state. To be specific, in some other embodiments, the Tag device 200 always sends the sound wave signal, and the mobile phone 100 determines, based on the RSSI, whether the sound wave signal sent by the Tag device 200 needs to be received. When the mobile phone 100 determines that the sound wave signal sent by the Tag device 200 needs to be received, the mobile phone 100 starts to receive the sound wave signal sent by the Tag device 200. When the mobile phone 100 determines that the sound wave signal sent by the Tag device 200 does not need to be received, the mobile phone 100 does not receive the sound wave signal sent by the Tag device 200.

However, in these application scenarios, in addition to the Tag device 200, other electronic devices are distributed around the mobile phone 100, and the other electronic devices may also send sound wave signals. In this case, the mobile phone 100 cannot identify, from the received sound wave signals, the sound wave signal sent by the Tag device 200. Based on this, in some implementations of this application, the sound wave signal sent by the Tag device 200 further carries a device identifier of the Tag device 200. The mobile phone 100 identifies, by using the device identifier of the Tag device 200, which sound wave signals are sound wave signals sent by the Tag device 200. In addition, in some other implementations of this application, when the Tag device 200 sends time information to the mobile phone 100, the time information further carries a device identifier of the Tag device 200.

In some embodiments of this application, the mobile phone 100 detects (that is, receives) a first group of sound wave signals at a first moment, and detects (that is, receives) a second group of sound wave signals at a second moment after the first moment. The first group of sound wave signals are a segment of sound wave signals, and the second group of sound wave signals are another segment of sound wave signals. The mobile phone 100 may continuously detect the first group of sound wave signals and the second group of sound wave signals, and then determine starting bands of the first group of sound wave signals and the second group of sound wave signals through correlation calculation, to separate the first group of sound wave signals and the second group of sound wave signals.

In some other alternative embodiments of this application, the mobile phone 100 detects (that is, receives) a first group of sound wave signals at a first moment, detects (that is, receives) a third group of sound wave signals at a fifth moment, and detects (that is, receives) a second group of sound wave signals at a second moment after the first moment. The fifth moment is between the first moment and the second moment. Specifically, the mobile phone 100 determines, based on the first group of sound wave signals, the third group of sound wave signals, first information, and third information corresponding to the third group of sound wave signals, a first distance that is between the mobile phone 100 and the Tag device 200 and that corresponds to the first moment. The first electronic device determines, based on the second group of sound wave signals, the third group of sound wave signals, second information, and the third information, a second distance that is between the mobile phone 100 and the Tag device 200 and that corresponds to the second moment. For example, the mobile phone 100 successively receives six groups of sound wave signals sent by the Tag device 200: a sound wave signal 1, a sound wave signal 2, a sound wave signal 3, a sound wave signal 4, a sound wave signal 5, and a sound wave signal 6. Based on a moving speed of the mobile phone 100 and a distance between the mobile phone 100 and the Tag device 200, it is determined that the distance between the mobile phone 100 and the Tag device 200 needs to be displayed on the mobile phone 100 when the sound wave signal 1, the sound wave signal 4, and the sound wave signal 6 arrive at the mobile phone 100. Based on this, the mobile phone 100 may determine, based on the sound wave signal 1 (or further including the sound wave signal 2, or further including the sound wave signal 2 and the sound wave signal 3), the distance between the mobile phone 100 and the Tag device 200 when the sound wave signal 1 arrives at the mobile phone 100. The mobile phone 100 may determine, based on the sound wave signal 2, the sound wave signal 3, and the sound wave signal 4, the distance between the mobile phone 100 and the Tag device 200 when the sound wave signal 4 arrives at the mobile phone 100. Similarly, the mobile phone 100 may determine, based on the sound wave signal 5 and the sound wave signal 6, the distance between the mobile phone 100 and the Tag device 200 when the sound wave signal 6 arrives at the mobile phone 100. The foregoing are merely some examples, and this is not specifically limited in this application.

It may be understood that the foregoing two types of embodiments are merely some examples of the sound wave signals received by the mobile phone 100. In this application, the mobile phone 100 may receive, at any moment, sound wave signals sent by any group of Tag devices 200. This falls within the protection scope of this application, and is not specifically limited in this application.

Step S806: The mobile phone 100 calculates a real-time distance between the mobile phone 100 and the Tag device 200 based on the detected sound wave signals, information corresponding to the sound wave signals, and the time offset.

In this application, the information corresponding to the sound wave signals includes sending time information of sending a group of sound wave signals when the Tag device 200 sends the group of sound wave signals. The sending time information is information that can represent a sending moment of the group of sound wave signals. For example, the sending time information may be a sending moment corresponding to the sound wave signal, or may be a sending interval corresponding to the sound wave signal. This is not specifically limited in this application. The following describes a real-time distance calculation method by using the foregoing two types of sending time information.

Based on this, the mobile phone 100 may determine, based on the detected sound wave signals, a receiving moment at which each of the plurality of groups of sound wave signals are received when the group of sound wave signals arrive at the mobile phone 100. Then, the mobile phone 100 calculates, based on the sending moment of each group of sound wave signals, the receiving moment of each group of sound wave signals, and a sound wave velocity, a distance between the mobile phone 100 and the Tag device 200 when each group of sound wave signals are received.

In some embodiments of this application, the mobile phone 100 detects (that is, receives) the first group of sound wave signals at the first moment, and detects (that is, receives) the second group of sound wave signals at the second moment after the first moment.

Specifically, as shown in FIG. 10(a). After detecting the first group of sound wave signals, the mobile phone 100 determines, based on the first group of sound wave signals, a receiving moment $t_{21}$ at which the first group of sound wave signals are received by the mobile phone 100. Then, the mobile phone 100 calculates, based on a sending moment $t_{11}$ at which the first group of sound wave signals are sent from the Tag device 200, the receiving moment $t_{21}$, a time offset Δ, and a sound wave velocity, a distance $d_1$ between the mobile phone 100 and the Tag device 200 at the moment $t_{21}$. In this case, the mobile phone 100 displays $d_1$ at the moment $t_{21}$ or after small duration from the moment $t_{21}$.

In this application, the distance may be calculated based on a distance calculation formula. A principle of calculating the following distance is the same as a principle of calculating the distance $d_1$, and details are not described below. For example, the distance calculation formula is $d_k=(t_{2k}-t_{1k}+\Delta)v$, where $d_k$ represents a real-time distance, k represents a quantity of groups of sound wave signals, $t_{2k}$ represents an arrival moment at which a k^th group of sound wave signals arrive at the mobile phone 100, and $t_{1k}$ represents a sending moment at which the k^th group of sound wave signals start to be sent.

Similarly, still refer to FIG. 10(a). After detecting the second group of sound wave signals, the mobile phone 100 determines, based on the second group of sound wave signals, a receiving moment $t_{22}$ at which the second group of sound wave signals are received by the mobile phone 100. Then, the mobile phone 100 calculates, based on a sending moment $t_{12}$ at which the second group of sound wave signals are sent from the Tag device 200, the receiving moment $t_{22}$, a time offset Δ, and a sound wave velocity, a distance $d_2$ between the mobile phone 100 and the Tag device 200 at the moment $t_{22}$. In this case, the mobile phone 100 displays $d_2$ at the moment $t_{22}$ or after small duration from the moment $t_{22}$.

In some implementations of this application, as shown in FIG. 10(b), the sending moment $t_{12}$ at which the second group of sound wave signals are sent from the Tag device 200 may alternatively be represented as $t_{11}+T_{u1}$, where $T_{u1}$ represents a sending interval between sending the second group of sound wave signals by the Tag device 200 and sending the first sound wave signal by the Tag device 200. In this case, $d_2=(t_{22}-(t_{11}+T_{u1})+\Delta)$ v. By analogy, $d_3=(t_{23}-(t_{11}+T_{u1}+T_{u2})+\Delta)v$.

That is, $d_k=(t_{2k}-(t_{11}+T_{u1}+...+T_{u(k-1)})+\Delta)v$, where $d_k$ represents a real-time distance, $t_{2k}$ represents an arrival moment at which a k^th group of sound wave signals arrive at the mobile phone 100, $t_{11}$ represents a sending moment at which the first group of sound wave signals start to be sent, k represents a quantity of groups of sound wave signals, $T_{u(k-1)}$ represents a sending interval between a (k-1)^th group of sound wave signals and the k^th group of sound wave signals, v represents a sound wave velocity, and Δ represents a time offset.

In some implementations of this application, as shown in FIG. 10(c), a sending interval between any two adjacent groups of sound wave signals is $T_u$. In this case, $d_k=(t_{2k}-(t_{11}+(k-1)T_u)+\Delta)v$, where $d_k$ represents a real-time distance, $t_{2k}$ represents an arrival moment at which a k^th group of sound wave signals arrive at the mobile phone 100, $t_{11}$ represents a sending moment at which the first group of sound wave signals start to be sent, k represents a quantity of groups of sound wave signals, $T_u$ represents a sending interval between two adjacent groups of sound wave signals, v represents a sound wave velocity, and Δ represents a time offset.

Step S807: The mobile phone 100 displays, in real time, the real-time distance obtained through calculation.

In this application, after receiving the first group of sound wave signals, the mobile phone 100 calculates the first distance corresponding to the first group of sound wave signals, and displays the first distance in real time after calculating the first distance. Similarly, after receiving the second group of sound wave signals, the mobile phone 100 calculates the second distance corresponding to the second group of sound wave signals, and displays the second distance in real time after calculating the second distance. It should be noted that, in this application, the mobile phone 100 does not process the received first group of sound wave signals only after the mobile phone 100 receives the second group of sound wave signals. The two groups of sound wave signals may be in a proper delay relationship, but there is no sequence of transfer steps between the two groups of sound wave signals.

Step S808: The mobile phone 100 determines whether a time interval since last Bluetooth time synchronization is less than a preset time threshold. If the time interval since last Bluetooth time synchronization is less than the preset time threshold, return to step S806. If the time interval since last Bluetooth time synchronization is not less than the preset time threshold, return to step S804.

In this application, each time after a preset time threshold Tb is reached, the mobile phone 100 and the Tag device 200 restart Bluetooth time synchronization. After the Bluetooth time synchronization ends, an updated time offset Δ' is obtained, and the real-time distance calculation formula is updated to $d_k=(t_{2k}-t_{1k}+\Delta')v$. Based on this, the mobile phone 100 and the Tag device 200 periodically perform Bluetooth time synchronization, so that time drift (that is, the time offset) between the mobile phone 100 and the Tag device 200 may be corrected. This ensures accuracy of distance measurement.

In some embodiments of this application, as shown in FIG. 10(a), the mobile phone 100 performs Bluetooth time synchronization with the Tag device 200 at a third moment, to determine a first time offset Δ that is between the mobile phone 100 and the Tag device 200 and that corresponds to the third moment $t_3$. The mobile phone 100 determines, based on the first time offset Δ, the first group of sound wave signals, and the first information, a first distance after the third moment $t_3$. The mobile phone 100 determines, based on the first time offset Δ, the second group of sound wave signals, and the second information, a second distance after the third moment $t_3$.

In some other embodiments of this application, still refer to FIG. 10(a). The mobile phone 100 performs Bluetooth time synchronization with the Tag device 200 at a fourth moment after preset duration of the third moment, to determine a second time offset Δ' that is between the mobile phone 100 and the Tag device 200 and that corresponds to the fourth moment $t_4$. The mobile phone 100 determines, based on the second time offset Δ', the first group of sound wave signals, and the first information, a first distance after the fourth moment $t_4$. The mobile phone 100 determines, based on the second time offset Δ', the second group of sound wave signals, and the second information, a second distance after the fourth moment $t_4$.

In addition, the Tag device 200 is equipped with a temperature sensor. After each time synchronization, current temperature information is sent to the mobile phone 100 through Bluetooth. The mobile phone 100 calculates a sound velocity based on the current temperature information: v=331+0.607Temp, where Temp is the temperature information that is fed back by the Tag device 200 and whose unit is °C.

In addition, in some embodiments of this application, when the mobile phone 100 displays at least two distances, and determines a third distance, the mobile phone 100 may determine a recommended movement direction of the mobile phone 100 based on the three distances and coordinates corresponding to the three distances determined by the mobile phone 100.

FIG. 11A and FIG. 11B are an interaction diagram corresponding to the distance measurement method in FIG. 8 according to some embodiments of this application. The following describes in detail the distance measurement solution provided in this application with reference to FIG. 8 and FIG. 11A and FIG. 11B. As shown in FIG. 11A and FIG. 11B, a mobile phone 100 includes a Bluetooth module 101a, a microphone 102a, a processor 103, and a display module 105. The Tag device 200 includes a Bluetooth module 201a and a speaker 202a. Specifically, the distance measurement method provided in this application includes the following steps.

Step S1101: The Bluetooth module 101a establishes a Bluetooth connection to the Bluetooth module 201a.

In this application, the Bluetooth module 101a in the mobile phone 100 establishes a wireless communication connection to the Bluetooth module 201a in the Tag device 200. However, it may be understood that a communication connection manner between the mobile phone 100 and the Tag device 200 is not specifically limited in this application. In addition to the Bluetooth pairing connection, the communication connection manner in this application may be another communication connection manner. This is not specifically limited in this application.

Step S1102: The Bluetooth module 101a receives a Bluetooth signal sent by the Bluetooth module 201a.

In this application, the Bluetooth signal refers to a broadcast packet that is sent by the Bluetooth module 201a and that carries parameters such as identification information of the Tag device 200 and signal strength. The Bluetooth module 101a in the mobile phone 100 can determine the identification information of the Tag device 200 and the signal strength of the Bluetooth signal based on the received Bluetooth signal.

In some embodiments of this application, the Bluetooth module 101a receives a periodic Bluetooth signal sent by the Bluetooth module 201a. The periodic Bluetooth signal is a Bluetooth signal sent by the Bluetooth module 201a based on a predetermined periodicity. In some implementations of this application, the Bluetooth module 101a receives a predetermined quantity of Bluetooth signals sent by the Bluetooth module 201a.

This is not specifically limited in this application.

It should be noted that, in this application, a solution for sending the periodic Bluetooth signal received by the Bluetooth module 101a in the mobile phone 100 is not specifically limited in this application, and only a Bluetooth signal received by the Bluetooth module 201a in the Tag device 200 needs to be limited in this application. Specifically, in some implementations of this application, the Bluetooth module 201a in the Tag device 200 always sends a periodic Bluetooth signal to the outside. After the Bluetooth module 101a establishes the communication connection to the Bluetooth module 201a, the Bluetooth module 101a starts to receive the periodic Bluetooth signal sent by the Bluetooth module 201a. In some other alternative implementations of this application, after the mobile phone 100 establishes the communication connection to the Tag device 200 by using the Bluetooth module 101a and the Bluetooth module 201a, the Bluetooth module 201a in the Tag device 200 starts to send a periodic Bluetooth signal to the outside.

Step S1103: The Bluetooth module 101a calculates an RSSI based on the received Bluetooth signal, and determines whether the RSSI obtained through calculation is greater than a preset strength threshold. If the RSSI obtained through calculation is greater than the preset strength threshold, go to step S1104. If the RSSI obtained through calculation is not greater than the preset strength threshold, return to step S1102. These steps are the same as steps S802 and S803, and details are not described herein again.

Step S1104: The Bluetooth module 101a performs Bluetooth time synchronization with the Bluetooth module 201a, to determine a time offset Δ between the mobile phone 100 and the Tag device 200.

The time offset Δ between the mobile phone 100 and the Tag device 200 represents a difference between a clock display of the mobile phone 100 and a clock display of the Tag device 200, and is irrelevant to real time. For example, if a clock of the mobile phone 100 shows 10:01 :02, and a clock of the Tag device 200 shows 10:01:03, the time offset Δ between the mobile phone 100 and the Tag device 200 is 0.01s. For another example, when a clock of the mobile phone 100 shows 10:01:03, and a clock of the Tag device 200 shows 10:01:02, the time offset Δ between the mobile phone 100 and the Tag device 200 is -0.01s.

Step S1105a: The Bluetooth module 101a sends a collection instruction to the microphone 102a.

The collection instruction is indication information that is generated by the mobile phone 100 when the Bluetooth module 101a determines that the RSSI is greater than the preset strength threshold and that indicates the microphone 102a to start to collect a sound wave signal.

It should be noted that the technical solution of switching from step S1104 to step S1106 is an example of the technical solution in this application. This is not specifically limited in this application. For example, in this application, step S1107 may be performed after step S1104 is performed, and then step S1106 is performed. For another example, in this application, steps S1106 and S1107 may be performed at a same time after step S1104 is performed.

Step S1105b: The Bluetooth module 101a sends a sound emitting start instruction to the Bluetooth module 201a.

Step S1106: In response to the sound emitting start instruction, the microphone 102a starts to collect the sound wave signal.

Step S1107: The speaker 202a starts to send the sound wave signal in response to the sound emitting start instruction.

In this application, after the mobile phone 100 determines that the mobile phone 100 establishes the communication connection to the Tag device 200, the Bluetooth module 101a sends the sound emitting start instruction to the Bluetooth module 201a, and the speaker 202a in the Tag device 200 starts to send several groups of sound wave signals. The speaker 220 in the Tag device 200 may periodically send the several groups of sound wave signals.

In some other embodiments of this application, after the mobile phone 100 determines that the mobile phone 100 establishes the communication connection to the Tag device 200, the Bluetooth module 101a sends the sound emitting start instruction to the Bluetooth module 201a, where the sound emitting start instruction carries a preset sending moment, and the speaker 202a in the Tag device 200 starts to send the several groups of sound wave signals based on the preset sending moment. The speaker 220 in the Tag device 200 may periodically send the several groups of sound wave signals. In some implementations of this application, a quantity of groups of sound wave signals is a predetermined value.

In some other embodiments of this application, after the mobile phone 100 determines that the mobile phone 100 establishes the communication connection to the Tag device 200, the Bluetooth module 101a sends the sound emitting start instruction to the Bluetooth module 201a, where the sound emitting start instruction carries a preset frequency band of the sound wave signal, and the speaker 202a in the Tag device 200 sends the sound wave signal of the preset frequency band based on the sound emitting start instruction.

Step S1108: The microphone 102a collects the sound wave signal sent by the speaker 202a.

In this application, sound wave signals sent by the Tag device 200 are several groups of sound wave signals, and the microphone 102a in the mobile phone 100 can receive the plurality of groups of sound wave signals sent by the speaker 202a in the Tag device 200. The sound wave signal may be an ultrasonic signal whose frequency is higher than 20 kHz, or may be a sound wave signal in another frequency band. This is not specifically limited in this application. The plurality of groups of sound wave signals refer to a plurality of segments of sound wave signals that are respectively sent at intervals based on a specific sending manner.

In some implementations of this application, a frequency range of the sound wave signals is 20 Hz to $2*10^4$ Hz. In some other alternative implementations of this application, a frequency range of the sound wave signals is $2*10^4$ Hz to $1*10^{12}$ Hz. In some other alternative implementations of this application, a frequency range of the sound wave signals is 20 Hz to $1*10^{12}$ Hz. For example, the frequency range of the sound wave signals is $1.8*10^4$ Hz to $2.2*10^4$ Hz.

Step S1109: The Bluetooth module 101a receives time information of the sound wave signal from the Bluetooth module 201a.

In this application, the time information is sending time information of the sound wave signal sent by the speaker 201a. The time information may include a sending moment or a sending interval. A sending moment $t_1$ of each group of sound wave signals may be directly represented by a start sending moment of each group of sound wave signals, or may be represented by a sending moment $t_1$ of a first group of sound wave signals and a sending interval $T_u$ between two adjacent groups of sound wave signals. A time difference between sending moments of the two adjacent groups of sound wave signals is the sending interval. This is not specifically limited in this application. In some implementations, sending intervals between the plurality of groups of sound wave signals may be fixed or changeable. For example, the sending interval is gradually shortened, or the sending interval is gradually prolonged.

In this application, the sending moment of each group of sound wave signals is fed back by using the Bluetooth module 101a and the Bluetooth module 201a, so that a transmission delay and a bit error rate may be reduced. This improves accuracy of distance measurement.

Then, in some implementations, the Tag device 200 determines a sending interval between two adjacent groups of sound wave signals, and sends the sound wave signals based on the determined sending interval. In addition, the Tag device 200 further sends the determined sending interval to the mobile phone 100, so that the mobile phone 100 can calculate, based on the sending moment of the first group of sound wave signals and the sending interval, a sending moment of each subsequent group of sound wave signals. Alternatively, the Tag device 200 calculates the sending moment of each group of sound wave signals based on the determined sending interval and the first group of sound wave signals, and then sends the calculated sending moment of each group of sound wave signals to the mobile phone 100. Alternatively, when the sending interval between sending moments of the two adjacent groups of sound wave signals changes according to a preset change rule, the Tag device 200 may send the change rule to the mobile phone 100, or the Tag device 200 calculates the sending moment of each group of sound wave signals according to the change rule, and then sends the sending moment of each group of sound wave signals to the mobile phone 100.

Specifically, in some implementations, the Tag device 200 determines the sending moment of each group of sound wave signals, and sends the sending moment of each group of sound wave signals to the mobile phone 100 at a same time. In some other implementations, the mobile phone 100 determines the sending moment of each group of sound wave signals, and generates a start sending instruction of each group of sound wave signals based on the sending moment of each group of sound wave signals. After receiving the start sending instruction, the Tag device 200 sends the sound wave signals to the outside based on the instruction.

In addition, there are various implementations in which the mobile phone 100 receives the plurality of groups of sound wave signals sent by the Tag device 200. The following briefly describes several implementation solutions. Specifically, in some implementations, the audio module 102 in the mobile phone 100 is always in an enabled state. After the mobile phone 100 establishes the communication connection to the Tag device 200, the audio module 202 in the Tag device 200 sends the plurality of groups of sound wave signals to the outside, so that the audio module 102 can receive the plurality of groups of sound wave signals sent by the audio module 202. In some other implementations, the Tag device 200 always sends the plurality of groups of sound wave signals to the outside. After the communication module 101 in the mobile phone 100 establishes a communication connection to the communication module 201 in the Tag device 200, the audio module 102 in the mobile phone 100 is started, to receive the plurality of groups of sound wave signals sent by the Tag device 200 to the outside. In some other implementations, after the mobile phone 100 establishes the communication connection to the Tag device 200, the audio module 102 in the mobile phone 100 is started, and the audio module 202 in the Tag device 200 sends the plurality of groups of sound wave signals to the outside, so that the audio module 102 can receive the plurality of groups of sound wave signals sent by the audio module 202.

Step S1110: In response to the microphone 102a, the processor 103 performs correlation calculation on the sound wave signal to obtain an arrival moment of the sound wave signal, and then calculates, based on the corresponding arrival moment, the time information, and a sound wave velocity, a real-time distance between the mobile phone 100 and the Tag device 200. The time information may include a sending moment and a sending interval, and the time information may further include a sending moment of each group of sound wave signals, and the arrival moment is a receiving moment at which the sound wave signals are received by the mobile phone 100.

In some embodiments of this application, the processor 103 in the mobile phone 100 performs correlation calculation on the plurality of groups of received sound wave signals, determines, based on correlation between the plurality of groups of sound wave signals and a template sound wave signal, start locations of the plurality of groups of sound wave signals, and further determines an arrival moment $t_2$ of each of the plurality of groups of sound wave signals. Then, the processor 103 in the mobile phone 100 obtains, through a bus, a sending moment $t_1$ of each group of sound wave signals obtained by the Bluetooth module 101a. Then, the processor 103 calculates, based on a formula, a real-time distance $d_k$ between the mobile phone 100 and the Tag device 200 based on the sending moment $t_1$, the arrival moment $t_2$, and a sound wave velocity v.

Step S1111: The display module 105 receives the real-time distance from the processor 103, and then step S1112 is performed.

Step S1112: The display module 105 displays the real-time distance on a display interface.

In some embodiments of this application, when the real-time distance is within a preset range, the display module 105 in the mobile phone 100 displays the real-time distance. When the real-time distance is greater than a preset range, the mobile phone 100 is far away from the Tag device, and the display module 105 in the mobile phone 100 does not display the distance. When the real-time distance is less than a preset range, a prompt is displayed, indicating that the Tag device 200 is nearby. For example, the preset range is 1 m to 20 m, or the preset range is 1 m to 10 m.

Step S1113: The processor 130 determines whether a sound emitting stop instruction is received, where the sound emitting stop instruction may be an operation instruction that is generated based on a touch operation of a user and that indicates to stop searching. If the sound emitting stop instruction is received, go to step S1114a and step S1114b. If the sound emitting stop instruction is not received, return to step S1108.

Step S1114a: The microphone 102a stops collecting the sound wave signal.

Step S1114b: The Bluetooth module 101a sends the sound emitting stop instruction to the Bluetooth module 201a, and then step S1115 is performed.

Step S1115: The speaker 202a stops sending the sound wave signal in response to the sound emitting stop instruction received by the Bluetooth module 201a.

Step S1116: The Bluetooth module 101a breaks the Bluetooth connection to the Bluetooth module 201a.

This application further provides some other embodiments. FIG. 12 is a flowchart of a distance measurement method according to some embodiments of this application. The following describes the distance measurement method provided in this application with reference to FIG. 12. Specifically, as shown in FIG. 12, the distance measurement method provided in this application includes the following steps.

Step S1201: A mobile phone 100 establishes a Bluetooth connection to a Tag device 200, and the mobile phone 100 receives a distance measurement instruction. Step S1201 is the same as step S801, and details are not described herein again.

Step S1202: The mobile phone 100 calculates an RSSI of the Tag device 200. Step S1202 is the same as step S802, and details are not described herein again.

Step S1203: The mobile phone 100 determines whether the RSSI is greater than a preset strength threshold. If the RSSI is greater than the preset strength threshold, go to step S1204. If the RSSI is not greater than the preset strength threshold, return to step S1202. Step S1203 is the same as step S803, and details are not described herein again.

Step S1204: The mobile phone 100 performs Bluetooth time synchronization with the Tag device 200, to obtain a time offset between the mobile phone 100 and the Tag device 200. Step S1204 is the same as step S804, and details are not described herein again.

Step S1205: The mobile phone 100 informs the Tag device 200 to send several groups of sound wave signals at a specified moment, and receives the plurality of groups of sound wave signals sent by the Tag device 200.

Step S1206: The mobile phone 100 calculates a real-time distance between the mobile phone 100 and the Tag device 200 based on the detected sound wave signals, time information corresponding to the sound wave signals, and the time offset. The time information may be a specified moment. Step S1206 is the same as step S806, and details are not described herein again.

Step S1207: The mobile phone 100 displays, in real time, the real-time distance obtained through calculation. Step S1207 is the same as step S807, and details are not described herein again.

Step S1208: The mobile phone 100 determines whether a time interval since last Bluetooth time synchronization is less than a preset time threshold. If the time interval since last Bluetooth time synchronization is less than the preset time threshold, return to step S1206. If the time interval since last Bluetooth time synchronization is not less than the preset time threshold, return to step S1204. Step S1208 is the same as step S808, and details are not described herein again.

In the foregoing distance measurement method, the mobile phone 100 does not need to feed back sending time information of each group of sound wave signals through Bluetooth, so that interaction between the mobile phone 100 and the Tag device 200 is reduced, and timeliness and accuracy of the distance measurement method are improved. In addition, the mobile phone 100 may further properly adjust sending time information corresponding to a subsequent group of sound wave signals based on the distance between the mobile phone 100 and the Tag device 200 that has been determined by the mobile phone 100.

In some embodiments of this application, when a first distance value determined by the mobile phone 100 is small, it indicates that the mobile phone 100 is close to the Tag device 200, and a user is about to find the Tag device 200. In this case, a sending time interval between a first group of sound wave signals and a second group of sound wave signals may be shortened, in other words, a difference between first time and second time may be reduced, to improve display precision of a distance between the mobile phone 100 and the Tag device 200, so that when the mobile phone 100 moves slightly, the mobile phone 100 can also accurately capture a distance difference between the mobile phone 100 and the Tag device 200.

In some other embodiments of this application, when a first distance value determined by the mobile phone 100 is small, it indicates that the mobile phone 100 is close to the Tag device 200, and a user is about to find the Tag device 200. In this case, a relative movement speed between the mobile phone 100 and the Tag device 200 may be slowed down, to improve display precision of a distance between the mobile phone 100 and the Tag device 200, so that when the mobile phone 100 moves slightly, the mobile phone 100 can also accurately capture a distance difference between the mobile phone 100 and the Tag device 200.

In addition, in some embodiments of this application, in the distance measurement method, first information corresponding to a first group of sound wave signals is determined by the mobile phone 100, and second information corresponding to a second group of sound wave signals is determined by the Tag device 200. The mobile phone 100 sends the first information to the Tag device 200, and the Tag device 200 sends the second information to the mobile phone 100. Alternatively, second information is determined by the mobile phone 100, and first information is determined by the Tag device 200. The mobile phone 100 sends the second information to the Tag device 200, and the Tag device 200 sends the first information to the mobile phone 100.

In addition, in a possible implementation, in the distance measurement method, first information and second information is determined by a third electronic device, and the mobile phone 100 and the Tag device 200 obtain the first information and the second information.

It may be understood that any combination of the foregoing implementations falls within the protection scope of this application. This is not specifically limited in this application.

FIG. 13A and FIG. 13B are an interaction diagram corresponding to the distance measurement method in FIG. 12 according to some embodiments of this application. The following describes in detail the distance measurement method provided in this application with reference to FIG. 13A and FIG. 13B. Specifically, as shown in FIG. 13A and FIG. 13B, the distance measurement method provided in this application includes the following steps.

Step S1301 to step S1305a, step S1306, and step S1308 are the same as step S1101 to step S1105a, step S1106, and step S1108, and details are not described herein again.

Step S1305b: Sound emitting start instruction, where the sound emitting instruction carries a preset sending moment.

Step S1308: A microphone 102a collects a sound wave signal sent by a speaker 202a at the preset sending moment.

Step S1310 to step S1316 are basically the same as step S1110 to step S1116, and details are not described herein again.

In conclusion, step S1305b is different from step S1105b. In addition, a step of a Bluetooth module 101a receiving a sending moment of each group of sound wave signals from a Bluetooth module 201a is canceled. This reduces interaction between the mobile phone 100 and the Tag device 200, improves calculation efficiency, and can also avoid false transmission, so that accuracy of a real-time distance is improved.

This application further provides some other embodiments. FIG. 14 is a flowchart of a distance measurement method according to some embodiments of this application. The following describes the distance measurement method provided in this application with reference to FIG. 14. Specifically, as shown in FIG. 14, the distance measurement method provided in this application includes the following steps.

Step S1401: A mobile phone 100 establishes a Bluetooth connection to a Tag device 200, and the mobile phone 100 receives a distance measurement instruction. Step S1401 is the same as step S801, and details are not described herein again.

Step S1402: The mobile phone 100 calculates an RSSI of the Tag device 200. Step S1402 is the same as step S802, and details are not described herein again.

Step S1403: The mobile phone 100 determines whether the RSSI is greater than a preset strength threshold. If the RSSI is greater than the preset strength threshold, go to step S1404. If the RSSI is not greater than the preset strength threshold, return to step S1402. Step S1403 is the same as step S803, and details are not described herein again.

Step S1404: The mobile phone 100 performs Bluetooth time synchronization with the Tag device 200. Step S1404 is the same as step S804, and details are not described herein again.

Step S1405: The mobile phone 100 informs the Tag device 200 to send several groups of sound wave signals, and after receiving acknowledgment character information, the mobile phone 100 receives the plurality of groups of sound wave signals sent by the Tag device 200 and a sending moment of each group of sound wave signals sent through Bluetooth.

After the Bluetooth time synchronization is completed, the mobile phone 100 needs to inform the Tag device 200 to send the sound wave signals each time. After receiving the notification, the Tag device 200 sends the acknowledgment (Acknowledgement, ACK) character information to the mobile phone 100 through the Bluetooth, then sends the sound wave signals, and notifies the mobile phone 100 of a moment at which the Tag device 200 sends the sound wave signals through the Bluetooth.

Step S1406: The mobile phone 100 calculates a real-time distance between the mobile phone 100 and the Tag device 200 based on the received sound wave signal. The mobile phone 100 determines the real-time distance between the mobile phone 100 and the Tag device 200 based on the received sound wave signal, time information, and a sound wave velocity. Step S1406 is basically the same as step S806, and details are not described herein again.

Step S1407: The mobile phone 100 displays, in real time, the real-time distance obtained through calculation. Step S1407 is the same as step S807, and details are not described herein again.

Step S1408: The mobile phone 100 determines whether a time interval since last Bluetooth time synchronization is less than a preset time threshold. If the time interval since last Bluetooth time synchronization is less than the preset time threshold, return to step S1406. If the time interval since last Bluetooth time synchronization is not less than the preset time threshold, return to step S1404. Step S1408 is the same as step S808, and details are not described herein again.

In the foregoing distance measurement method, after the Bluetooth time synchronization, the mobile phone 100 directly notifies the Tag device 200 of a start time at which the mobile phone 100 starts to send an ultrasonic signal. In this way, the Tag device 200 does not need to feed back a sending time of the Tag device 200 through the Bluetooth. This reduces interaction between the mobile phone 100 and the Tag device 200.

FIG. 15A and FIG. 15B are an interaction diagram corresponding to the distance measurement method in FIG. 14 according to some embodiments of this application. The following describes the distance measurement method provided in this application with reference to FIG. 15A andFIG. 15B. As shown in FIG. 15A and FIG. 15B, the distance measurement method in this application includes the following steps.

Step S1501 to step S1506 are the same as step S1101 to step S1106, and details are not described herein again.

Step S1507: A Bluetooth module 201a sends an ACK to a Bluetooth module 101a.

Step S1508 to step S1517 are basically the same as step S1107 to step S1116, and details are not described herein again.

In conclusion, step S1507 is added in this embodiment of this application. In this way, after performing time synchronization once, a mobile phone 100 periodically triggers a Tag device 200 to send a plurality of groups of sound wave signals for the mobile phone 100 to perform distance measurement. The mobile phone 100 may calculate and display a distance to the Tag device 200 in real time. This implements proper control on a measurement system.

In addition, in some embodiments of this application, Bluetooth interaction information (for example, time synchronization information, sending time information, and temperature information) between the mobile phone 100 and the Tag device 200 is stored in a log (log). The sound wave signals are stored in a recording module of a microphone.

FIG. 16 is a diagram of a hardware structure of a mobile phone 100 according to an embodiment of this application.

As shown in FIG. 16, the mobile phone 100 is used as an example, the mobile phone 100 may include a processor 110 (that is, the processor 103 described above), an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160 (that is, the communication module 101), an audio module 170 (that is, the audio module 102 described above), a speaker 170A, a receiver 170B, a microphone 170C, a headset jack 170D, a sensor module 180, a button 190, a motor 191, an indicator 192, a camera 193, a display 194 (that is, the display module 105 described above), a subscriber identity module (subscriber identity module, SIM) card interface 195, an EDL mode protection circuit, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency. In some embodiments, the processor 110 may invoke and execute an instruction that is of the distance measurement method provided in embodiments of this application and that is stored in the memory, to implement the the distance measurement method provided in embodiments of this application. In some other embodiments, the memory in the processor 110 may be further configured to store the foregoing first image file, an instruction corresponding to a preset signature method, a device identifier of the mobile phone 100, and the like.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. In some other embodiments, after the mobile phone 100 enters an EDL mode, a host device may establish a communication connection to the mobile phone 100 through the USB interface, to access data in the mobile phone 100.

The charging management module 140 is configured to receive a charging input from a charger. The charging management module 140 supplies power to the mobile phone 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals.

The mobile communication module 150 may provide a wireless communication solution that is applied to the mobile phone 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The mobile phone 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The external memory interface 120 may be used to connect to an external storage card, for example, a micro SD card, to extend a storage capability of the mobile phone 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, an application function corresponding to a function related to the Synergy service 12), and the like. The data storage area may store data created in a process of using the mobile phone 100, for example, is used to store a tar format file obtained after migrated data is packaged. In addition, the internal memory 121 may include a high-speed random access memory, and may further include a non-volatile memory, for example, at least one magnetic disk storage component, a flash storage component, or a universal flash storage (universal flash storage, UFS). The processor 110 executes various function applications of the mobile phone 100 by running the instructions stored in the internal memory 121 and/or the instructions stored in the memory disposed in the processor 110.

The mobile phone 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

For example, the mobile phone 100 may further include one or more of a button 190, a motor 191, an indicator 192, a SIM card interface 195 (or an eSIM card), and the like.

An EDL short-circuiting protection circuit is coupled to at least one pin of a processor 110, and the EDL short-circuiting protection circuit includes at least one connection terminal. When the protection circuit in an EDL mode is valid, for example, when the circuit enables the at least one pin of the processor, the mobile phone 100 may enter the EDL mode.

In some embodiments, the mobile phone 100 may further include a button (not shown), for example, a volume up button, a volume down button, or a power button. A user may enable the mobile phone 100 to enter the EDL mode by performing a combined operation on buttons of the mobile phone 100. For example, when the mobile phone 100 is in an off state, if it is detected that a plurality of buttons of the volume up button, the volume down button, and the power button are simultaneously pressed, the mobile phone 100 enters the EDL mode. For another example, when the mobile phone 100 is in an off state, if it is detected that a plurality of buttons of the volume up button, the volume down button, and the power button are simultaneously pressed, and the protection circuit in the EDL mode in the mobile phone 100 is in a valid state, the mobile phone 100 enters the EDL mode.

It may be understood that a structure of the mobile phone 100 shown in this embodiment of this application does not constitute a specific limitation on the mobile phone 100. In some other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

Further, FIG. 17 is a diagram of a structure of another electronic device according to some embodiments of this application. In some embodiments of this application, the electronic device may be a notebook computer 400. As shown in FIG. 17, the notebook computer 400 includes one or more processors 401, a system memory 402, a non-volatile memory (Non-Volatile Memory, NVM) 403, a communication interface 404, an input/output (I/O) device 405, and system control logic 406 configured to couple the processor 401, the system memory 402, the non-volatile memory 403, the communication interface 404, and the input/output (I/O) device 405.

The processor 401 may include one or more processing units, for example, may include a processing module or a processing circuit of a central processing unit CPU (Central Processing Unit), a graphics processing unit GPU (Graphics Processing Unit), a digital signal processor DSP (Digital Signal Processor), a microprocessor MCU (Micro-programmed Control Unit), an AI (Artificial Intelligence, artificial intelligence) processor, or a programmable logic device FPGA (Field Programmable Gate Array), or may include one or more single-core or multi-core processors. The processor 401 may be configured to execute instructions to implement the access control method provided in embodiments of this application.

The system memory 402 is a volatile memory, for example, a random access memory (Random Access Memory, RAM) or a double data rate synchronous dynamic random access memory (Double Data Rate Synchronous Dynamic Random Access Memory, DDR SDRAM). The system memory is configured to temporarily store data and/or instructions. For example, in some embodiments, the system memory 402 may be configured to store the key identifier, the signature information, the device identifier of the mobile phone 100, and the like, or may be configured to store an instruction of a preset signature method corresponding to the key identifier.

The non-volatile memory 403 may include one or more tangible, non-transitory computer-readable media configured to store data and/or instructions. In some embodiments, the non-volatile memory 403 may include any proper non-volatile memory such as a flash memory and/or any proper non-volatile storage device, for example, a hard disk drive (Hard Disk Drive, HDD), a compact disc (Compact Disc, CD), a digital versatile disc (Digital Versatile Disc, DVD), or a solid-state drive (Solid-State Drive, SSD). In some embodiments, the non-volatile memory 403 may alternatively be a removable storage medium, for example, a secure digital (Secure Digital, SD) storage card. In some other embodiments, the non-volatile memory 403 may be configured to store the key identifier, the signature information, the device identifier of the mobile phone 100, and the like, or may be configured to store an instruction of a preset signature method corresponding to the key identifier.

Particularly, the system memory 402 and the non-volatile memory 403 may respectively include a temporary copy and a permanent copy of an instruction 407. The instruction 407 may include: when executed by the processor 401, the notebook computer 400 is enabled to implement the access control method provided in embodiments of this application.

The communication interface 404 may include a transceiver, configured to provide a wired or wireless communication interface for the notebook computer 400, to communicate with any other proper device by using one or more networks. In some embodiments, the communication interface 404 may be integrated into another component of the notebook computer 400. For example, the communication interface 404 may be integrated into the processor 401. In some embodiments, the notebook computer 400 may communicate with another device through the communication interface 404. For example, the notebook computer 400 may obtain the device identifier of the mobile phone 100 and the key identifier from the mobile phone 100 through the communication interface 404, or may send the signature information and the instruction to the mobile phone 100.

The input/output (I/O) device 405 may include an input device such as a keyboard or a mouse, and an output device such as a monitor. A user may interact with the notebook computer 400 by using the input/output (I/O) device 405, for example, input instructions to a first application running on the notebook computer 400, to obtain a fuse bit file, a device identifier file, and the like of the mobile phone 100 from the mobile phone 100.

The system control logic 206 may include any suitable interface controller to provide any suitable interface with another module of the notebook computer 400. For example, in some embodiments, the system control logic 406 may include one or more memory controllers, to provide an interface connected to the system memory 402 and the non-volatile memory 403.

In some embodiments, at least one of the processors 401 may be packaged with logic of one or more controllers used for the system control logic 406, to form a system-in-package (System-in-Package, SiP). In some other embodiments, at least one of the processors 401 may be further integrated on a same chip with logic of one or more controllers used for the system control logic 406, to form a system-on-a-chip (System-on-a-Chip, SoC).

It may be understood that a structure of the notebook computer 400 shown in this embodiment of this application does not constitute a specific limitation on the electronic device. In some other embodiments of this application, the notebook computer 400 may include more or fewer components than those shown in the figure, or some components may be combined, or some components may be split, or components are arranged in different manners. The components shown in the figure may be implemented by hardware, software, or a combination of software and hardware.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used to input instructions to perform a function described in this application and generate output information. The output information may be used in one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programming language or an object-oriented programming language to communicate with the processing system. The program code can also be implemented in an assembly language or a machine language when needed. The mechanism described in this application is not limited to the scope of any particular programming language. In either case, the language may be a compiled language or an interpreted language.

FIG. 18 is an architectural diagram of a mobile phone 100 according to some embodiments of this application. As shown in FIG. 18, an application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, audio, calls that are made and received, browsing history and bookmarks, a phone book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an alert sound is played, an electronic device vibrates, or an indicator light blinks.

Android Runtime includes a kernel library and a virtual machine. The Android runtime is responsible for scheduling and management of an Android system.

The kernel library includes two parts: a function that needs to be invoked in java language and a kernel library of Android.

An application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

A kernel layer is a layer between hardware and software. The kernel layer includes at least a display driver, a camera driver, an audio driver, and a sensor driver.

A system library may include a plurality of functional modules, for example, a surface manager (surface manager, SM), a media library (Media Library, ML), a three-dimensional graphics processing library (for example, OpenGL ES), and a 2D graphics engine (for example, SGL).

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be used to input instructions to perform a function described in this application and generate output information. The output information may be used in one or more output devices in a known manner. For a purpose of this application, a processing system includes any system having a processor such as a digital signal processor (Digital Signal Processor, DSP), a microcontroller, an application-specific integrated circuit (Application-Specific Integrated Circuit, ASIC), or a microprocessor.

The program code may be implemented in a high-level programming language or an object-oriented programming language to communicate with the processing system. The program code can also be implemented in an assembly language or a machine language when needed. The mechanism described in this application is not limited to the scope of any particular programming language. In either case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a compact disc read-only memory (CD-ROM), a magnetooptical disc, a read-only memory (Read-only Memory, ROM), a random access memory (Random Access Memory, RAM), an erasable programmable read-only memory (Erasable Programmable Read-only Memory, EPROM), an electrically erasable programmable read-only memory (Electrically Erasable Programmable Read-only Memory, EEPROM), a magnetic or an optical card, a flash memory, or a tangible machine-readable memory that is configured to transmit information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine (for example, a computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments. In some embodiments, these features may not be included or may be combined with other another feature.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that, in the examples and specification of this patent, relational terms such as first and second are merely used to distinguish one entity or operation from another entity or operation, and do not necessarily require or imply any such actual relationship or order between these entities or operations. Moreover, the terms "include", "comprise", or any other variant thereof are intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a" does not, without more constraints, preclude the existence of additional identical elements in the process, method, article, or device that includes the element.

Although this application has been illustrated and described with reference to some example embodiments of this application, a person of ordinary skill in the art should understand that various changes may be made to this application in form and detail without departing from the scope of this application.

## Claims

1. A distance measurement method, comprising:

   detecting, by a first electronic device, a distance measurement instruction;
   detecting, by the first electronic device at a first moment, a first group of sound wave signals sent by a second electronic device, and determining, based on the first group of sound wave signals and first information corresponding to the first group of sound wave signals, a first distance that is between the first electronic device and the second electronic device and that corresponds to the first moment, wherein the first information comprises first sending time information of sending the first group of sound wave signals by the second electronic device;
   displaying, by the first electronic device, the first distance;
   detecting, by the first electronic device at a second moment after the first moment, a second group of sound wave signals sent by the second electronic device, and determining, based on the second group of sound wave signals and second information corresponding to the second group of sound wave signals, a second distance that is between the first electronic device and the second electronic device and that corresponds to the second moment, wherein the second information comprises second sending time information of sending the second group of sound wave signals by the second electronic device; and
displaying, by the first electronic device, the second distance.

**2.** The distance measurement method according to claim 1, wherein the first electronic device receives the first information and the second information from the second electronic device.

**3.** The distance measurement method according to claim 1, wherein the first electronic device sends the first sending time information and the second sending time information to the second electronic device, so that the second electronic device sends the first group of sound wave signals based on the first sending time information, and the second electronic device sends the second group of sound wave signals based on the second sending time information.

**4.** The distance measurement method according to any one of claims 1 to 3, further comprising:

detecting, by the first electronic device at a fifth moment, a third group of sound wave signals sent by the second electronic device, wherein the fifth moment is between the first moment and the second moment;
determining, by the first electronic device based on the first group of sound wave signals, the third group of sound wave signals, the first information, and third information corresponding to the third group of sound wave signals, the first distance that is between the first electronic device and the second electronic device and that corresponds to the first moment; and
determining, by the first electronic device based on the second group of sound wave signals, the third group of sound wave signals, the second information, and the third information, the second distance that is between the first electronic device and the second electronic device and that corresponds to the second moment.

**5.** The distance measurement method according to claim 1, further comprising:
sending, by the first electronic device, a sound emitting instruction to the second electronic device, wherein the sound emitting instruction indicates the second electronic device to send sound wave signals, and the sound wave signals comprise the first group of sound wave signals and the second group of sound wave signals.

**6.** The distance measurement method according to claim 5, wherein a frequency range of the sound wave signals is a preset frequency range.

**7.** The distance measurement method according to claim 1, further comprising:
establishing, by the first electronic device, a Bluetooth connection to the second electronic device, and when received signal strength of a Bluetooth signal that is sent by the second electronic device and that is received by the first electronic device is greater than a preset strength threshold, starting to detect, by the first electronic device, the sound wave signals sent by the second electronic device.

**8.** The distance measurement method according to claim 7, further comprising:

performing, by the first electronic device at a third moment, Bluetooth time synchronization with the second electronic device, to determine a first time offset that is between the first electronic device and the second electronic device and that corresponds to the third moment; and
determining, by the first electronic device based on the first time offset, the first group of sound wave signals, and the first information, a first distance after the third moment, and determining, by the first electronic device based on the first time offset, the second group of sound wave signals, and the second information, a second distance after the third moment.

**9.** The distance measurement method according to claim 8, further comprising:

performing, by the first electronic device at a fourth moment after preset duration of the third moment, Bluetooth time synchronization with the second electronic device, to determine a second time offset that is between the first electronic device and the second electronic device and that corresponds to the fourth moment; and
determining, by the first electronic device based on the second time offset, the first group of sound wave signals, and the first information, a first distance after the fourth moment, and determining, by the first electronic device based on the second time offset, the second group of sound wave signals, and the second information, a second distance after the fourth moment.

**10.** The distance measurement method according to any one of claims 1 to 9, further comprising:
detecting, by the first electronic device, the distance measurement instruction when the first electronic device detects a distance measurement operation performed by a user on the first electronic device and the second electronic device and/or a search operation performed by the user on the second electronic device.

**11.** The distance measurement method according to claim 1, wherein

a frequency range of the sound wave signals is 20 Hz to $2*10^4$ Hz;
a frequency range of the sound wave signals is $2* 10^4$ Hz to $1 * 10^{12}$ Hz; or
a frequency range of the sound wave signals is 20 Hz to $1 * 10^{12}$ Hz.

**12.** An electronic device, comprising:

a memory, configured to store instructions; and
one or more processors, wherein when the instructions are executed by the one or more processors, the processor performs the distance measurement method according to any one of claims 1 to 11.

**13.** A computer-readable storage medium, wherein the computer-readable storage medium stores instructions, and when the instructions are executed on an electronic device, the electronic device is enabled to perform the distance measurement method according to any one of claims 1 to 11.

**14.** A computer program product, wherein the computer program product comprises instructions, and when the instructions are executed by one or more processors, the instructions are used to implement the distance measurement method according to any one of claims 1 to 11.

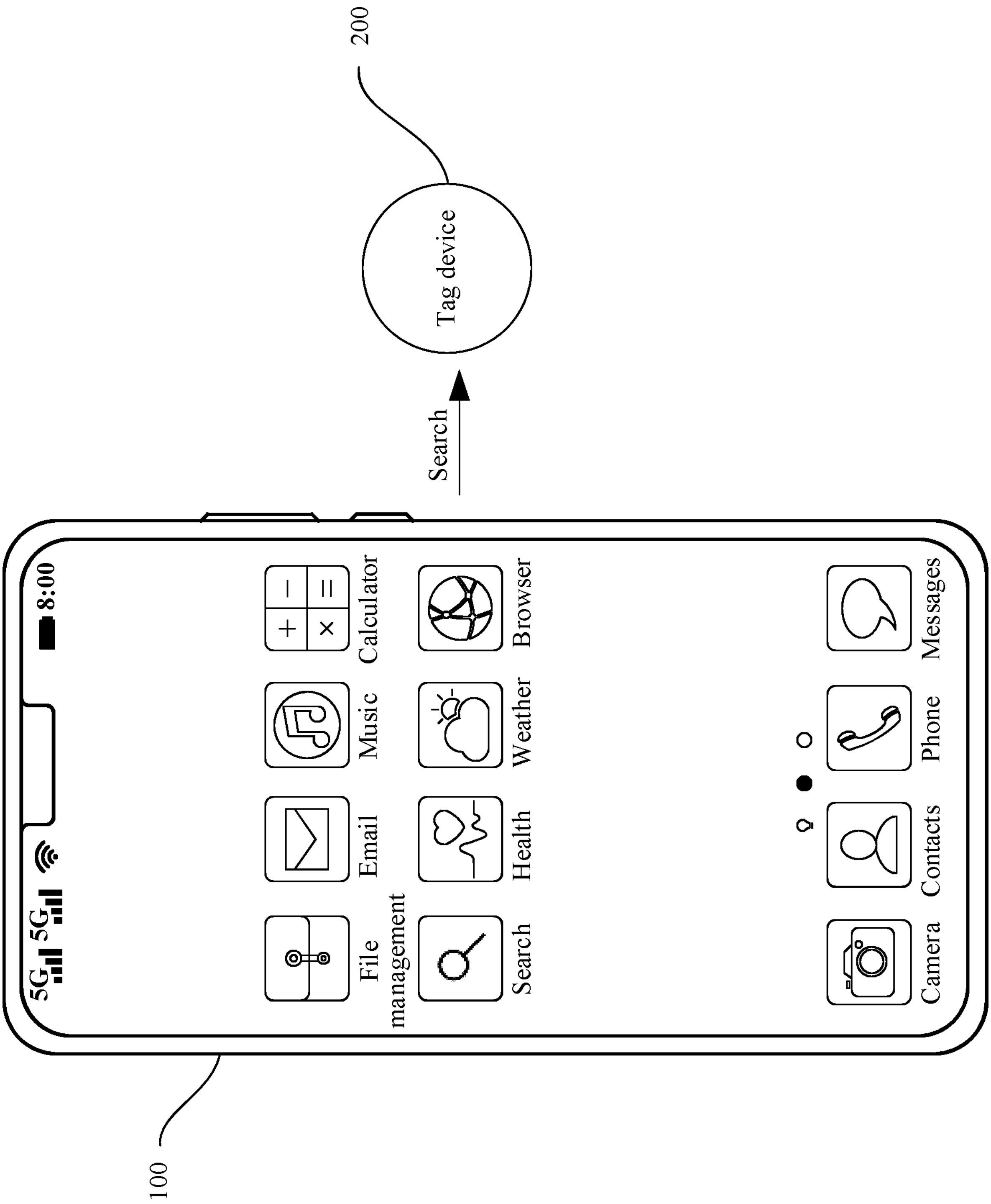
200
Tag device
Search
8:00
5G
5G
Calculator
Music
Email
File management
Browser
Weather
Health
Search
Messages
Phone
Contacts
Camera
100

FIG. 1(a)

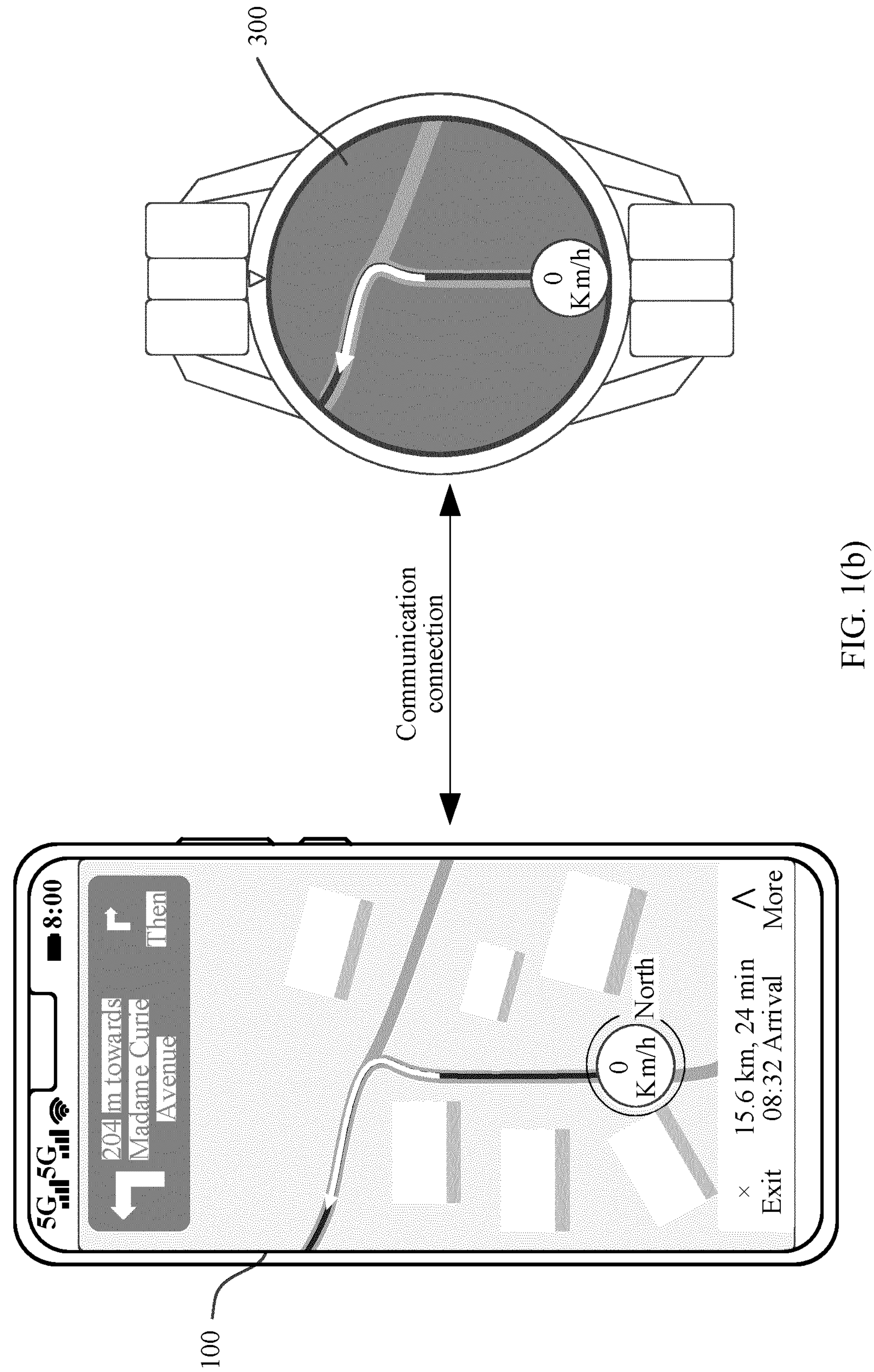
300
0
Km/h
Communication
connection
5G 5G
8:00
204 m towards
Madame Curie
Avenue
Then
0
Km/h
North
×
Exit
15.6 km, 24 min
08:32 Arrival
More
100

FIG. 1(b)

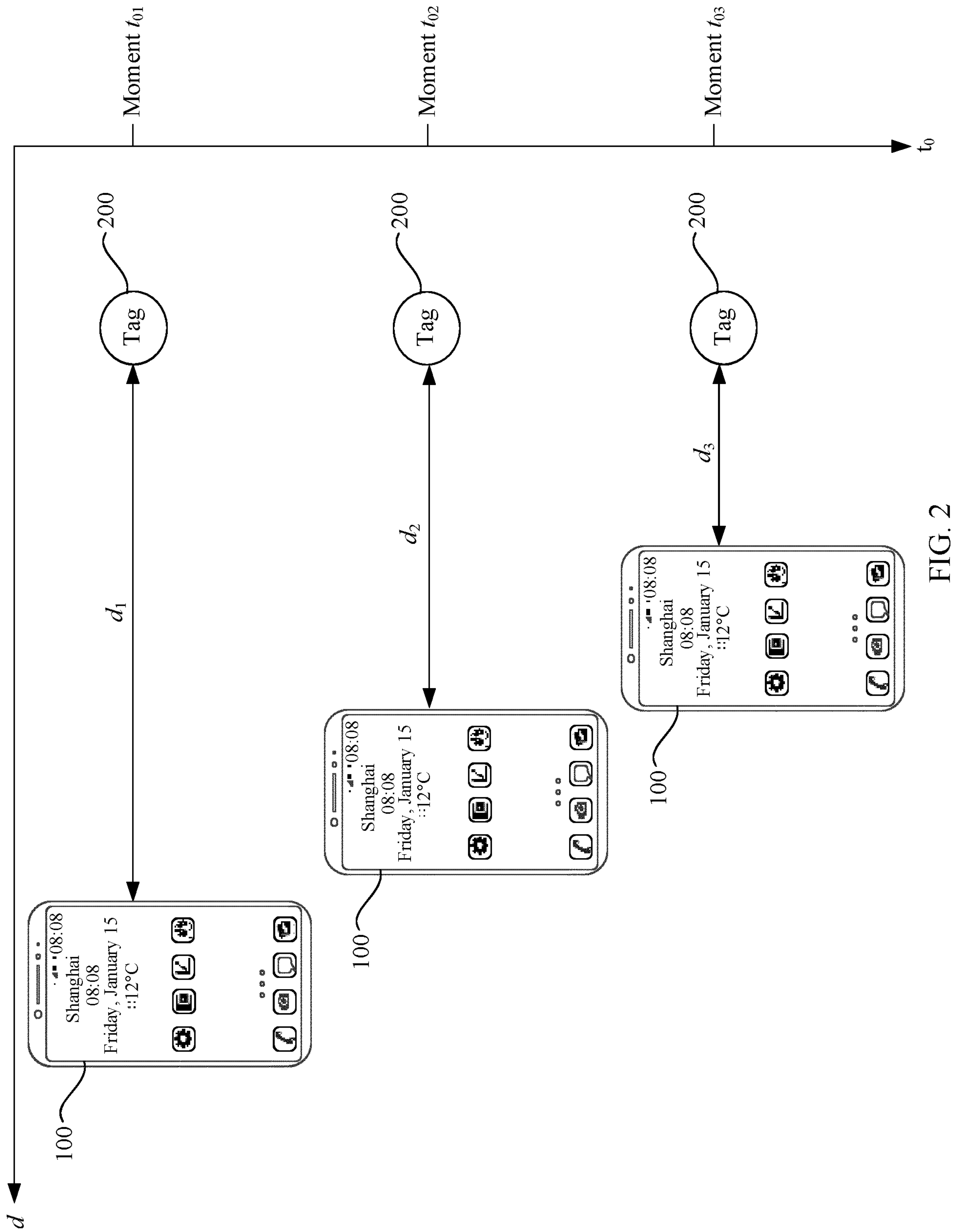
Moment $t_{01}$
Moment $t_{02}$
Moment $t_{03}$
$t_0$
$d$
Tag
200
$d_1$
$d_2$
$d_3$
100
08:08
Shanghai
08:08
Friday, January 15
12°C

FIG. 2

100

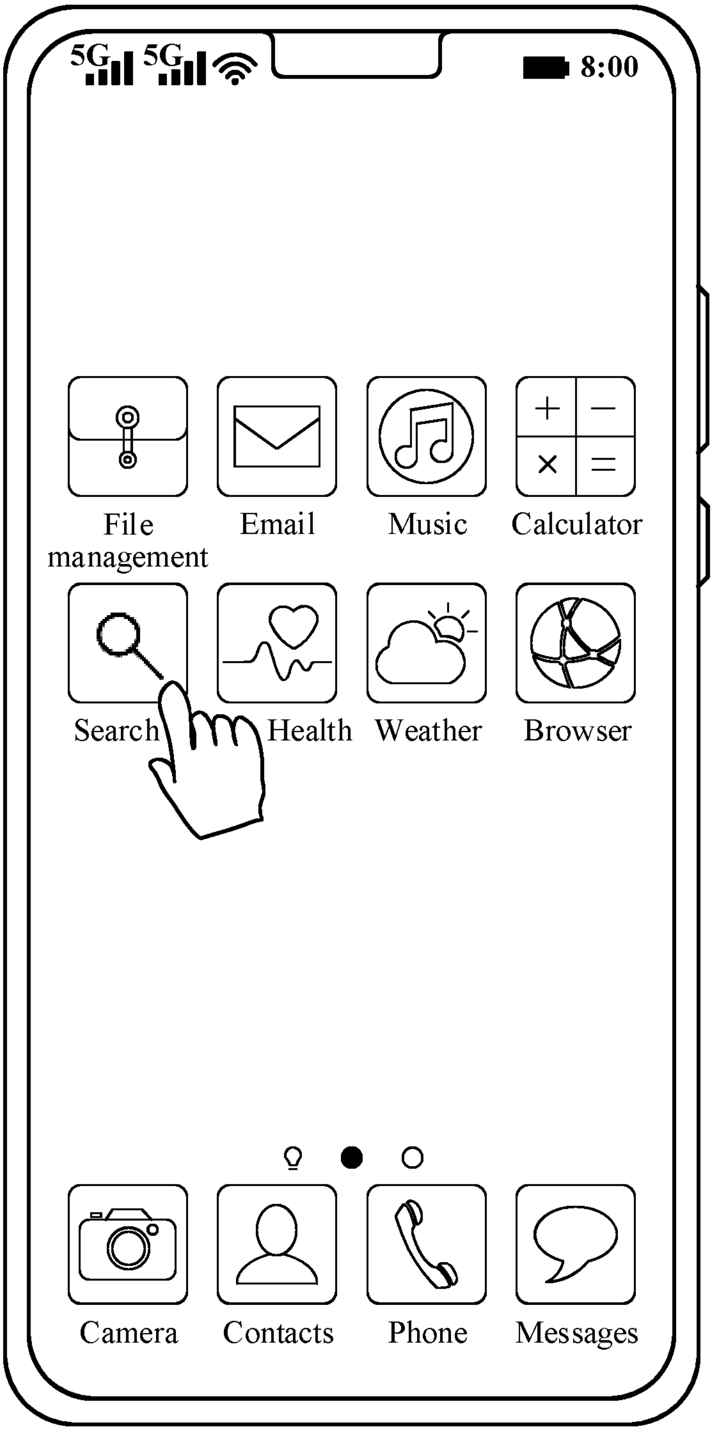
5G 5G
8:00
File management
Email
Music
Calculator
Search
Health
Weather
Browser
Camera
Contacts
Phone
Messages

FIG. 3(a)

100

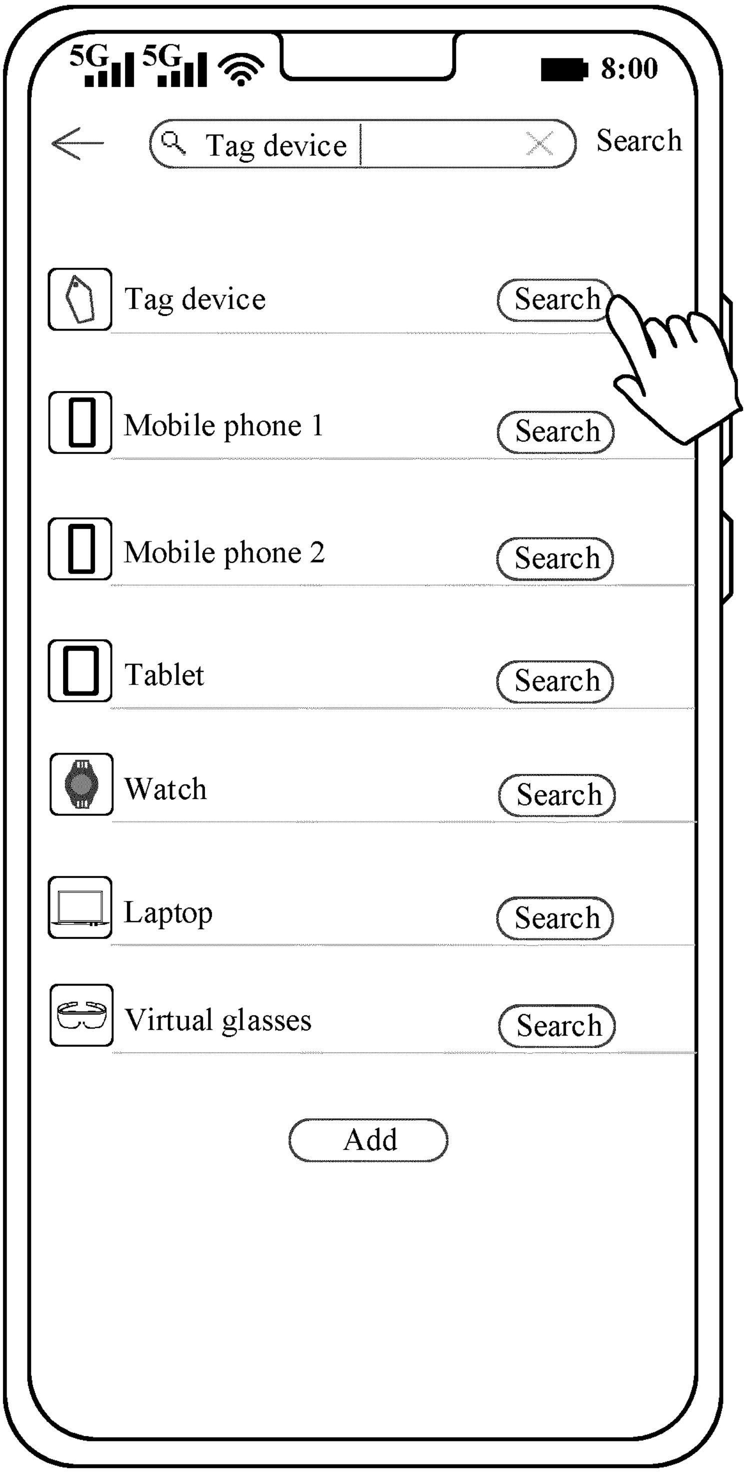
5G 5G
8:00
Tag device
Search
Tag device
Search
Mobile phone 1
Search
Mobile phone 2
Search
Tablet
Search
Watch
Search
Laptop
Search
Virtual glasses
Search
Add

FIG. 3(b)

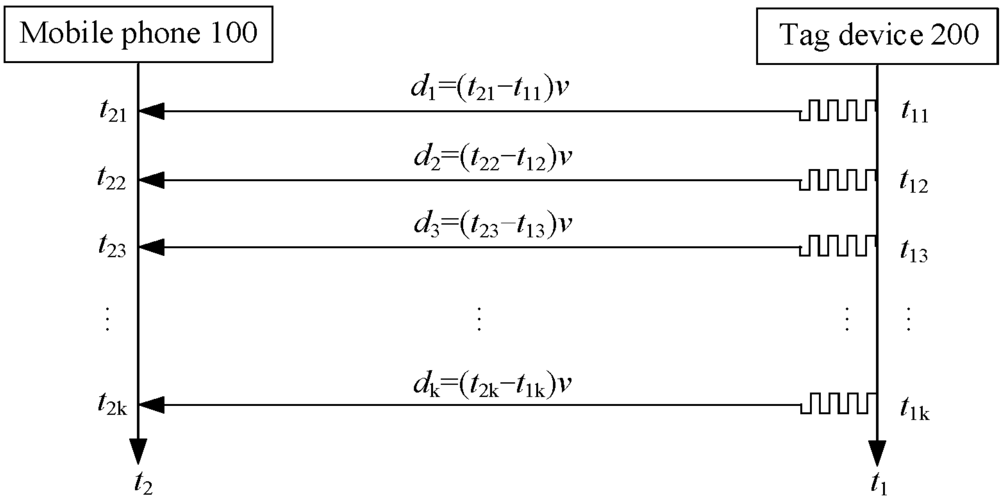
Mobile phone 100
Tag device 200
$d_1=(t_{21}-t_{11})v$
$d_2=(t_{22}-t_{12})v$
$d_3=(t_{23}-t_{13})v$
$d_k=(t_{2k}-t_{1k})v$
$t_{21}$
$t_{22}$
$t_{23}$
$t_{2k}$
$t_{11}$
$t_{12}$
$t_{13}$
$t_{1k}$
$t_2$
$t_1$

FIG. 4

100

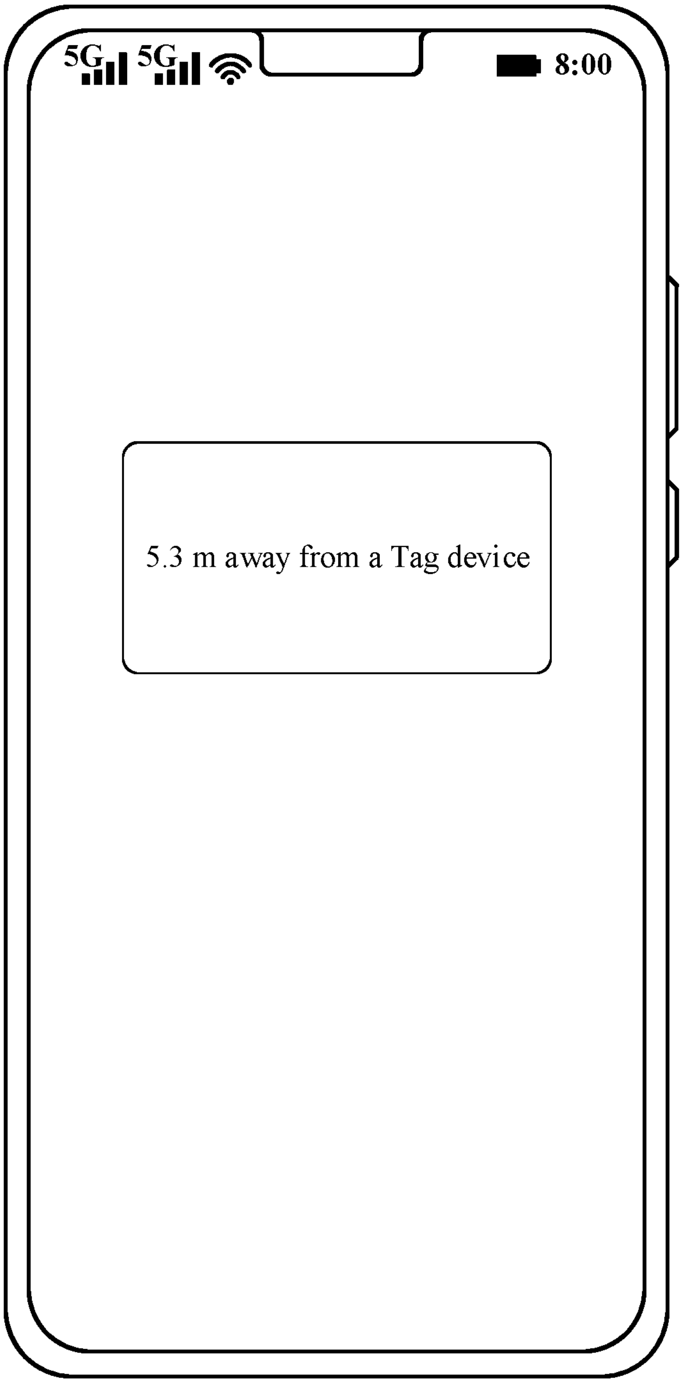


FIG. 5(a)

100

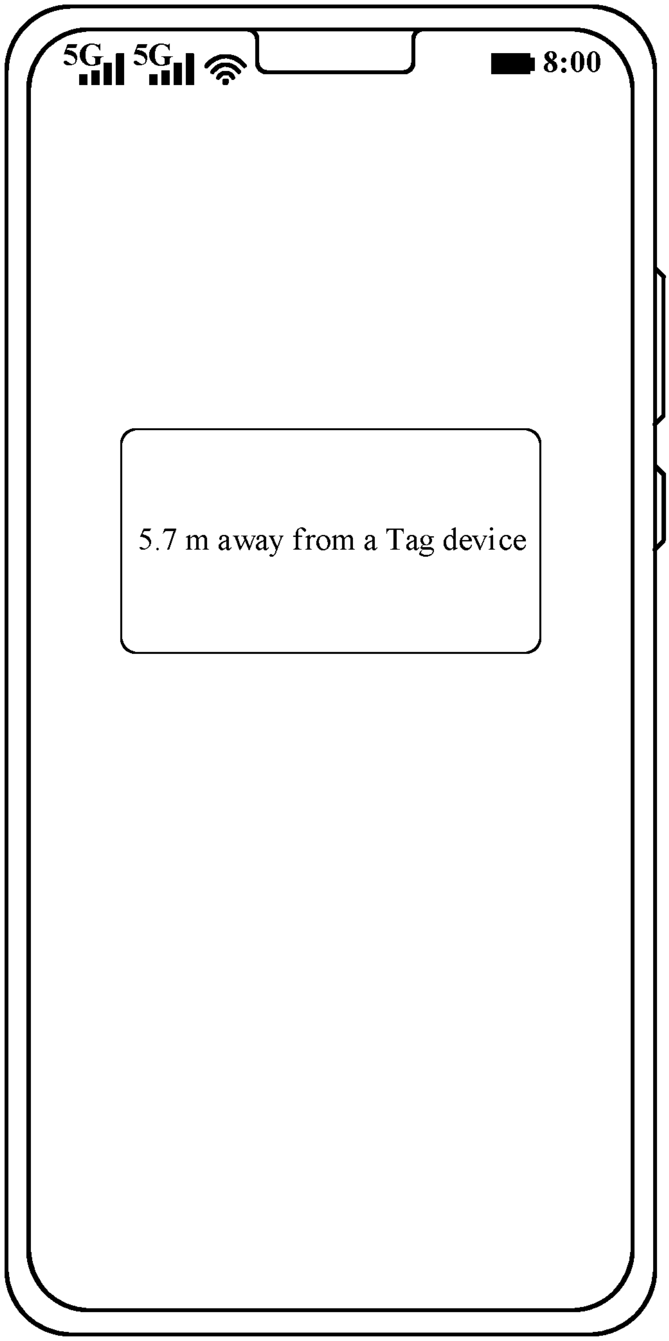


FIG. 5(b)

100

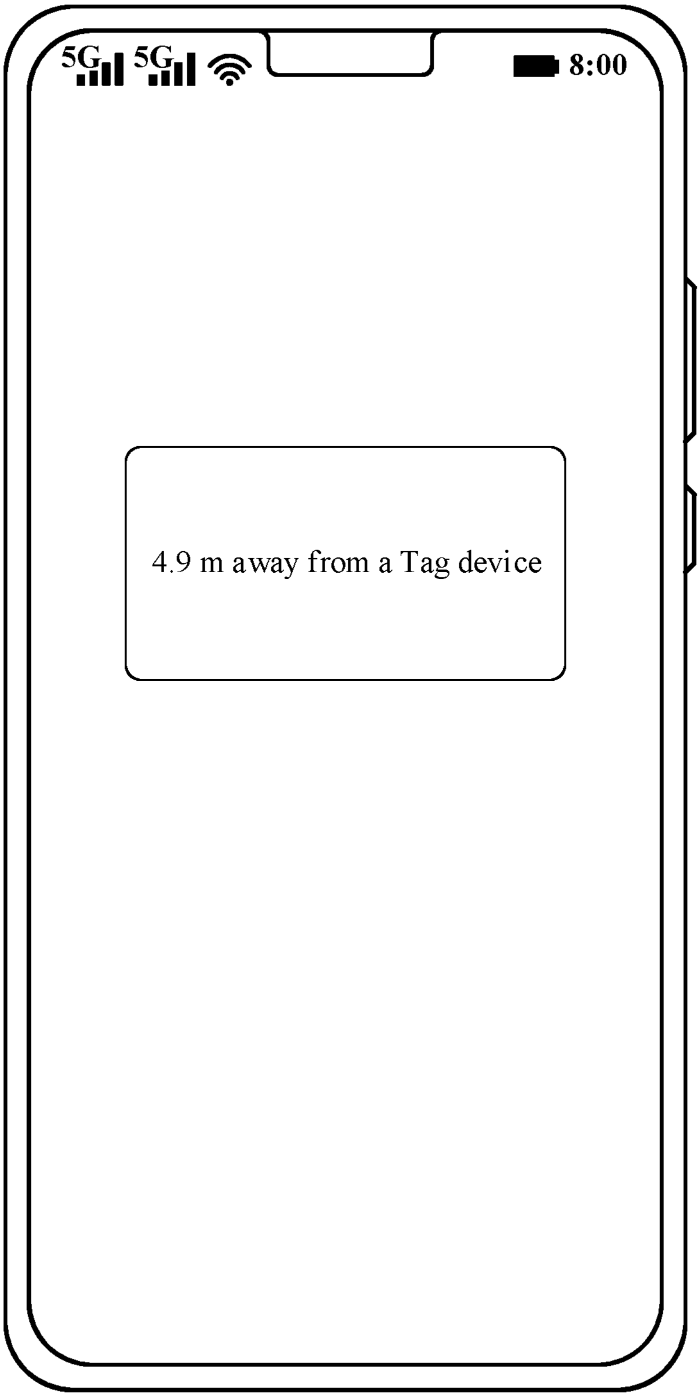


FIG. 5(c)

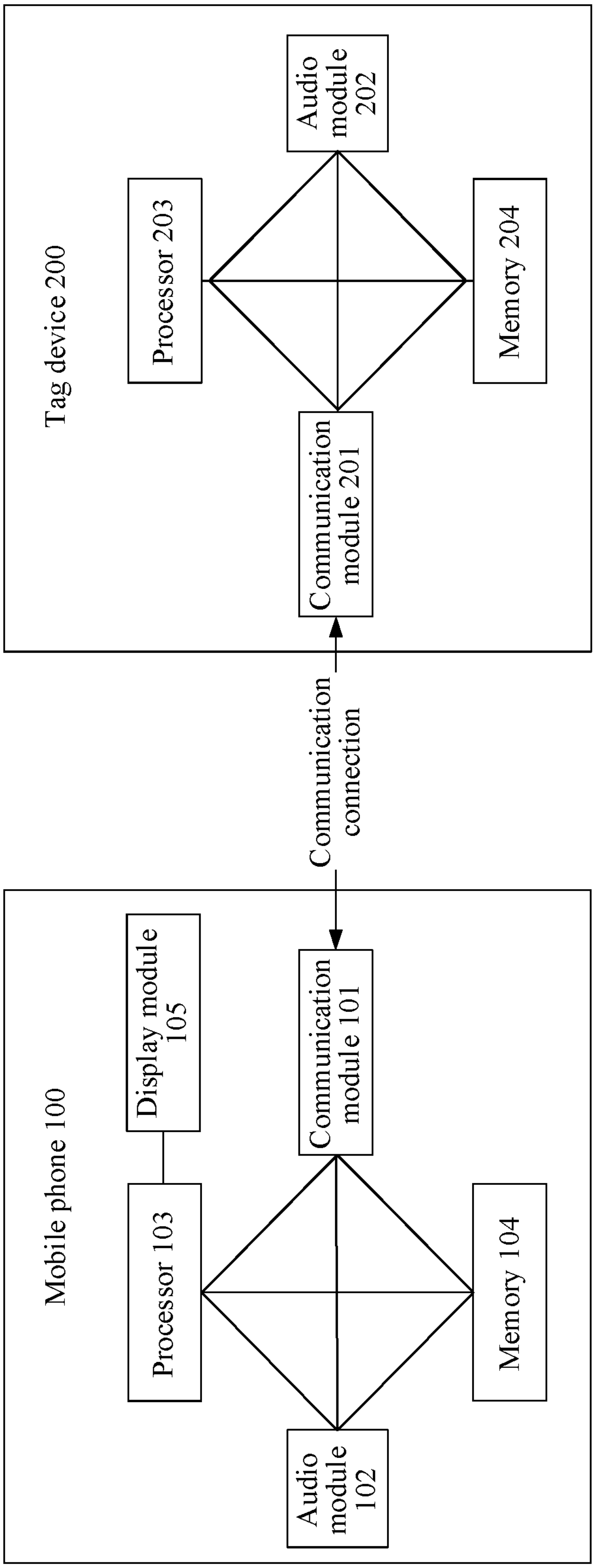
Tag device 200
Audio module 202
Processor 203
Memory 204
Communication module 201
Communication connection
Mobile phone 100
Display module 105
Communication module 101
Processor 103
Memory 104
Audio module 102

FIG. 6

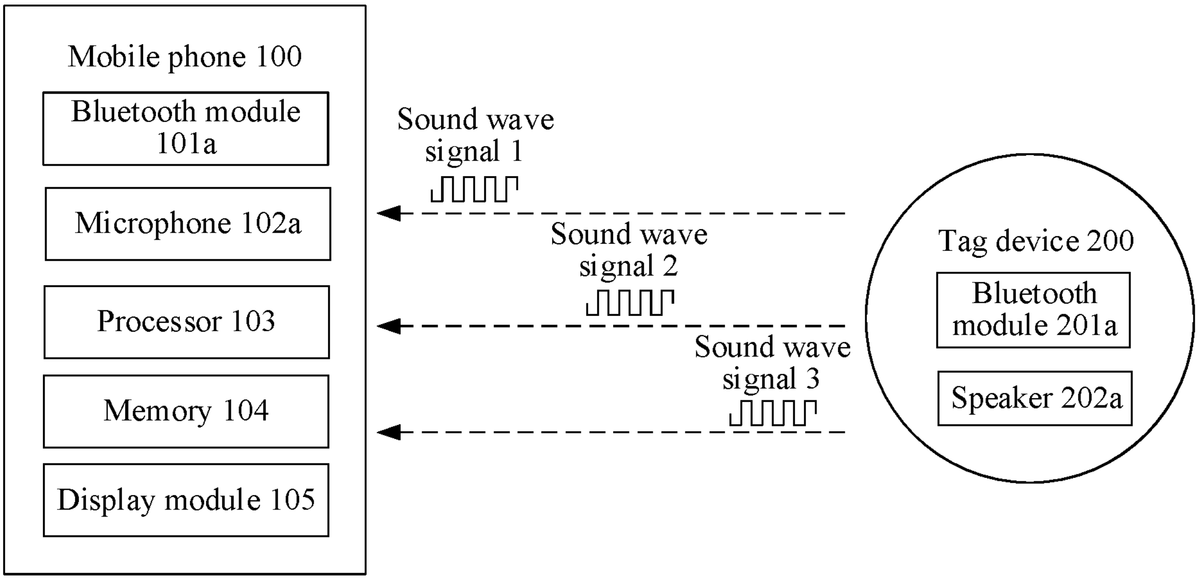
Mobile phone 100
Bluetooth module 101a
Microphone 102a
Processor 103
Memory 104
Display module 105
Sound wave signal 1
Sound wave signal 2
Sound wave signal 3
Tag device 200
Bluetooth module 201a
Speaker 202a

FIG. 7

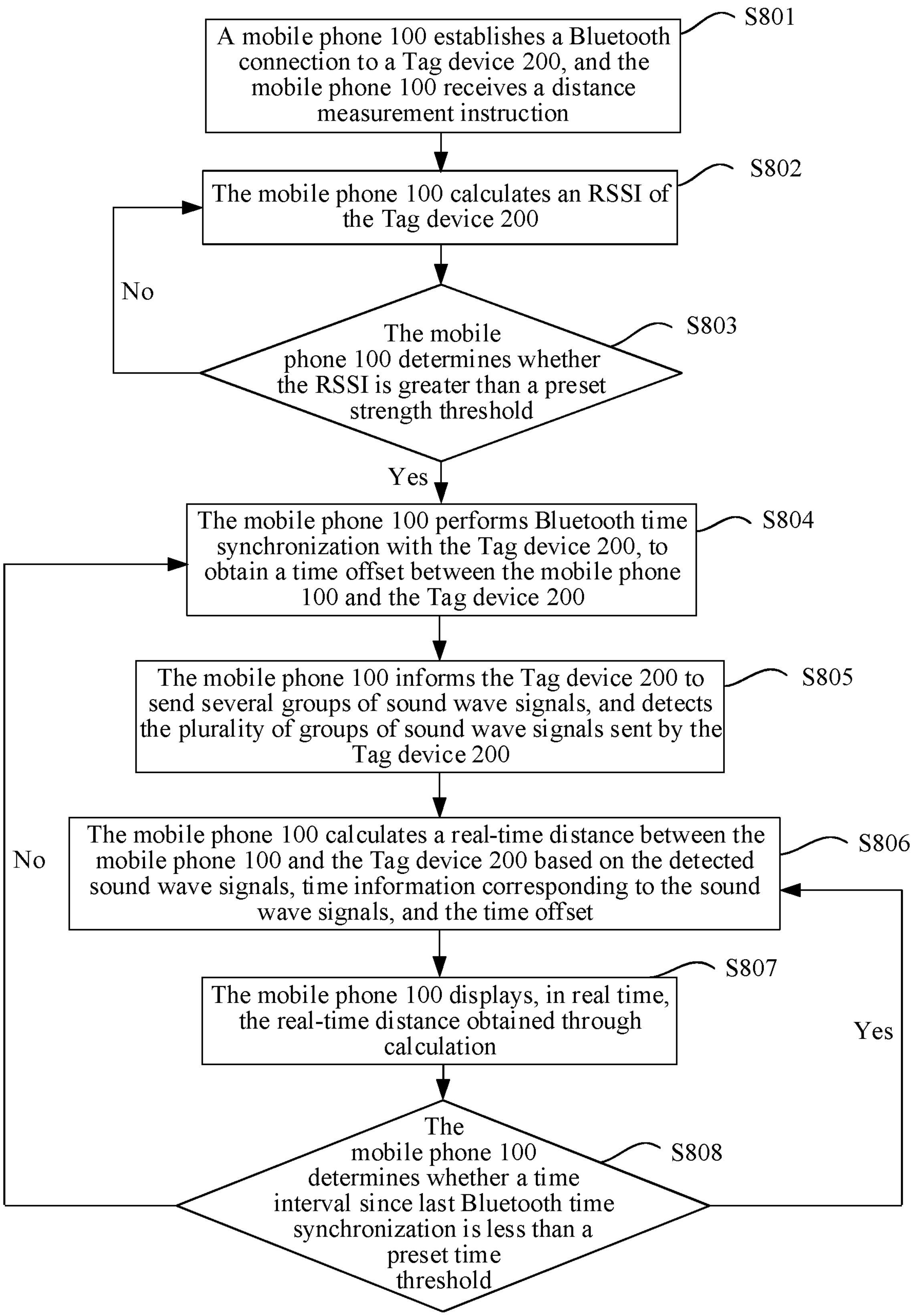
S801
A mobile phone 100 establishes a Bluetooth connection to a Tag device 200, and the mobile phone 100 receives a distance measurement instruction
S802
The mobile phone 100 calculates an RSSI of the Tag device 200
No
S803
The mobile phone 100 determines whether the RSSI is greater than a preset strength threshold
Yes
S804
The mobile phone 100 performs Bluetooth time synchronization with the Tag device 200, to obtain a time offset between the mobile phone 100 and the Tag device 200
S805
The mobile phone 100 informs the Tag device 200 to send several groups of sound wave signals, and detects the plurality of groups of sound wave signals sent by the Tag device 200
S806
The mobile phone 100 calculates a real-time distance between the mobile phone 100 and the Tag device 200 based on the detected sound wave signals, time information corresponding to the sound wave signals, and the time offset
No
S807
The mobile phone 100 displays, in real time, the real-time distance obtained through calculation
Yes
S808
The mobile phone 100 determines whether a time interval since last Bluetooth time synchronization is less than a preset time threshold

FIG. 8

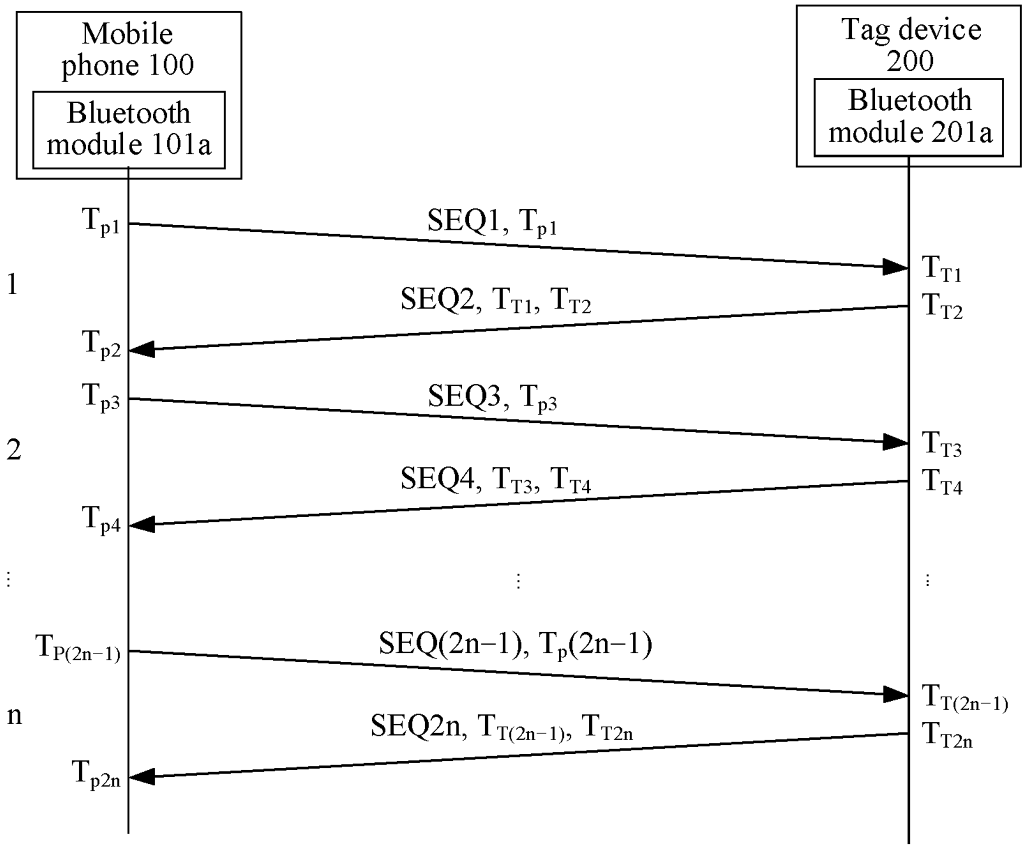
Mobile phone 100
Bluetooth module 101a
Tag device 200
Bluetooth module 201a
Tp1
SEQ1, Tp1
TT1
1
SEQ2, TT1, TT2
TT2
Tp2
Tp3
SEQ3, Tp3
TT3
2
SEQ4, TT3, TT4
TT4
Tp4
TP(2n−1)
SEQ(2n−1), Tp(2n−1)
TT(2n−1)
n
SEQ2n, TT(2n−1), TT2n
TT2n
Tp2n

FIG. 9

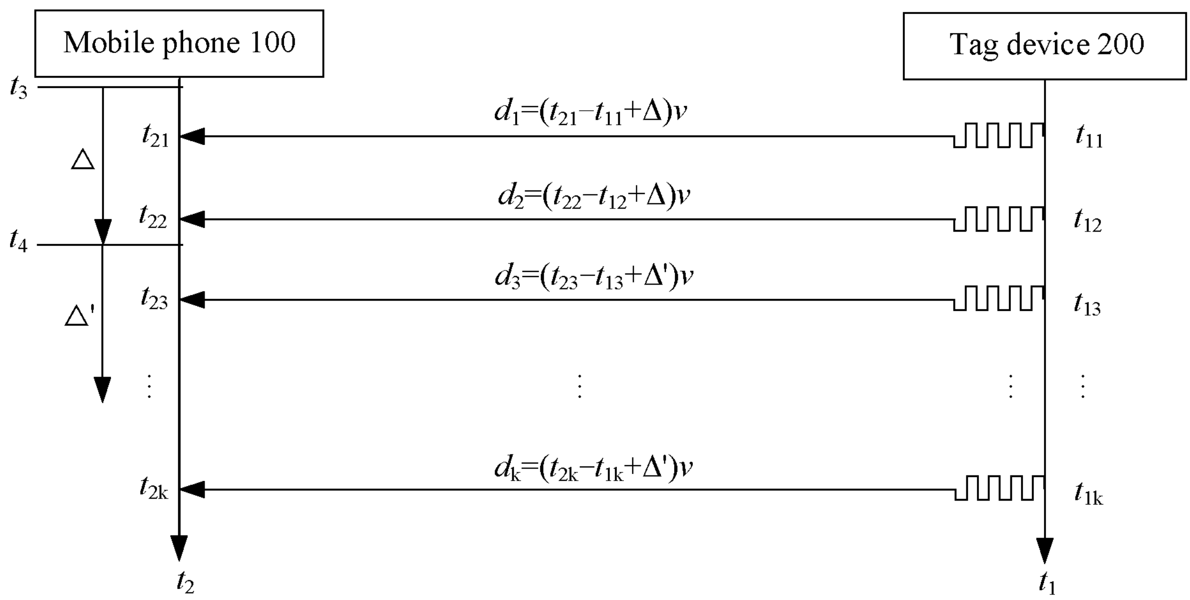
Mobile phone 100
Tag device 200
t3
t21
△
t22
t4
t23
△'
t2k
t2
d1=(t21−t11+Δ)v
d2=(t22−t12+Δ)v
d3=(t23−t13+Δ')v
dk=(t2k−t1k+Δ')v
t11
t12
t13
t1k
t1

FIG. 10(a)

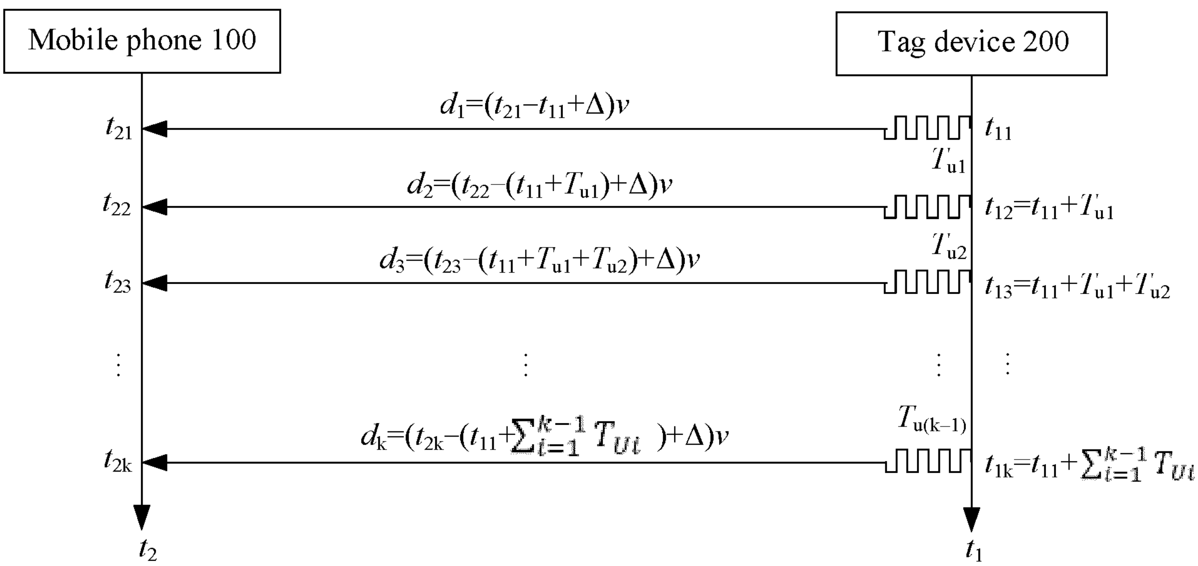


FIG. 10(b)

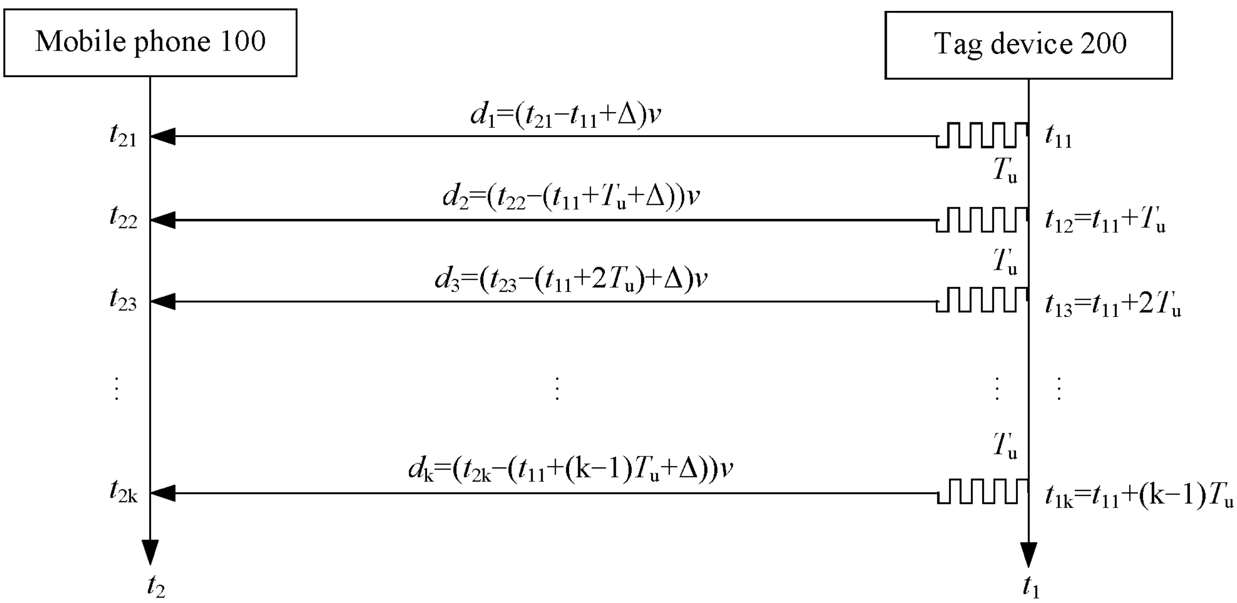


FIG. 10(c)

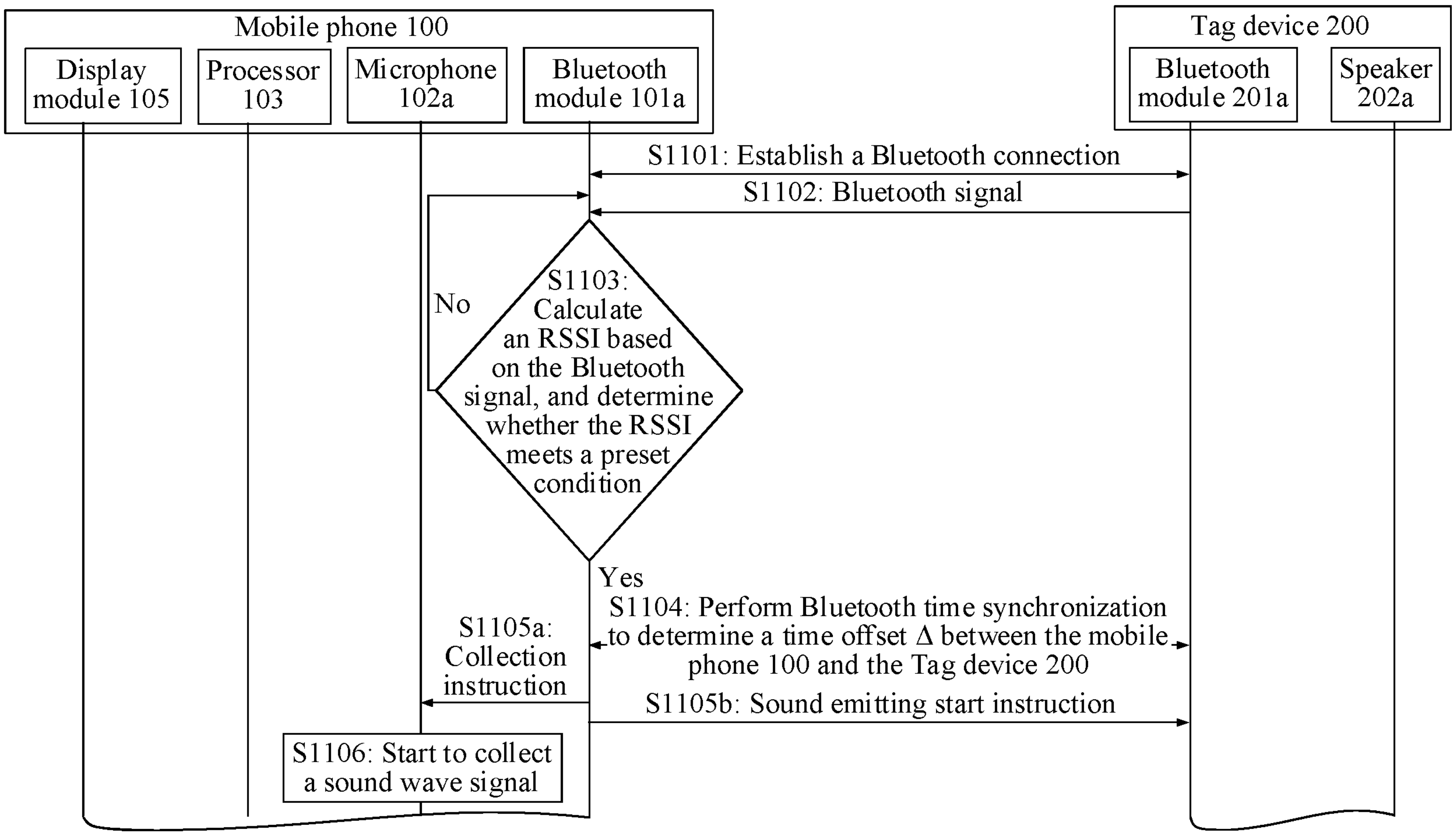


TO FIG. 11B

TO FIG. 11B

FIG. 11A

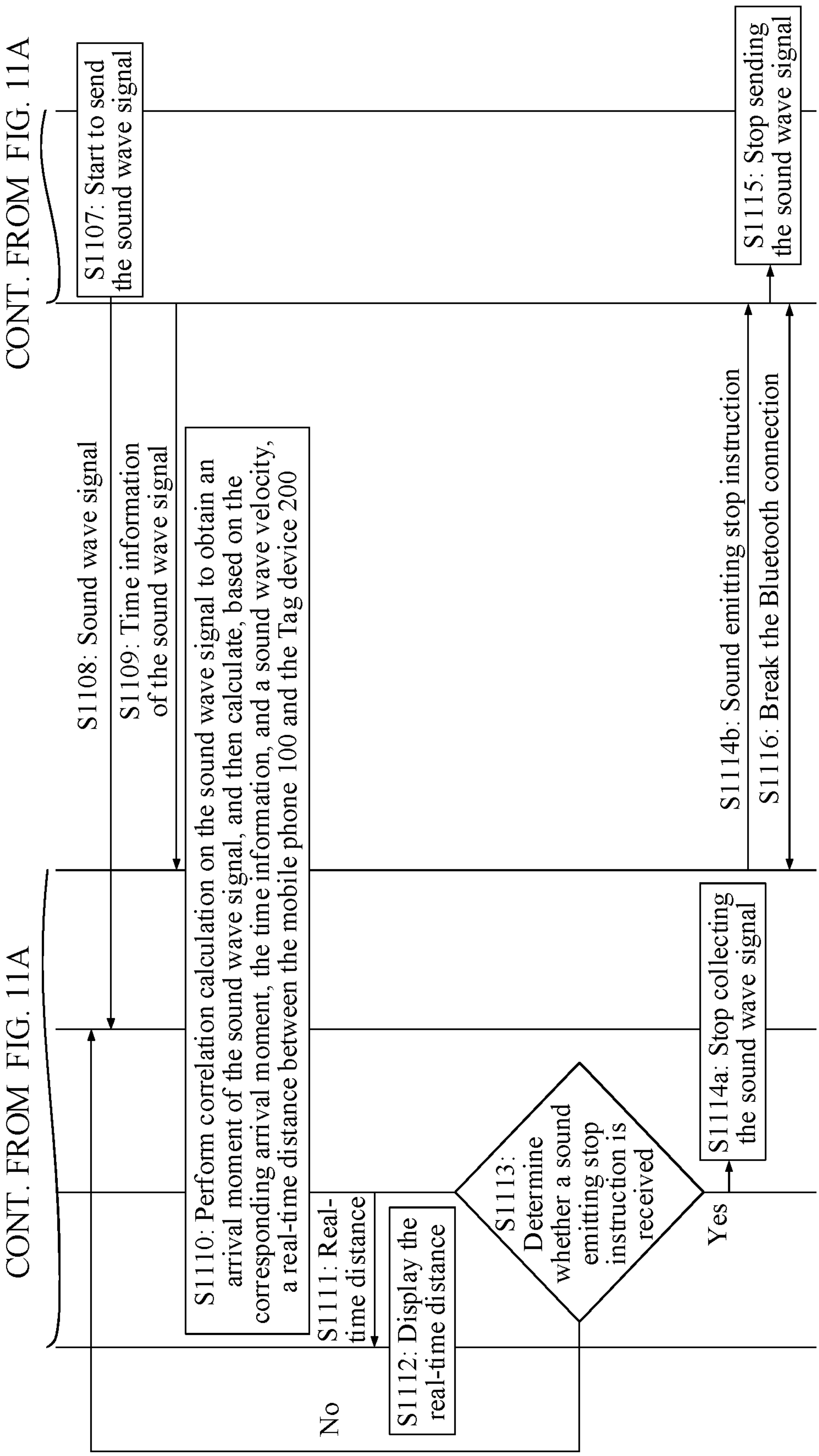
CONT. FROM FIG. 11A
CONT. FROM FIG. 11A
S1107: Start to send the sound wave signal
S1108: Sound wave signal
S1109: Time information of the sound wave signal
S1110: Perform correlation calculation on the sound wave signal to obtain an arrival moment of the sound wave signal, and then calculate, based on the corresponding arrival moment, the time information, and a sound wave velocity, a real-time distance between the mobile phone 100 and the Tag device 200
S1111: Real-time distance
S1112: Display the real-time distance
S1113: Determine whether a sound emitting stop instruction is received
No
Yes
S1114a: Stop collecting the sound wave signal
S1114b: Sound emitting stop instruction
S1115: Stop sending the sound wave signal
S1116: Break the Bluetooth connection

FIG. 11B

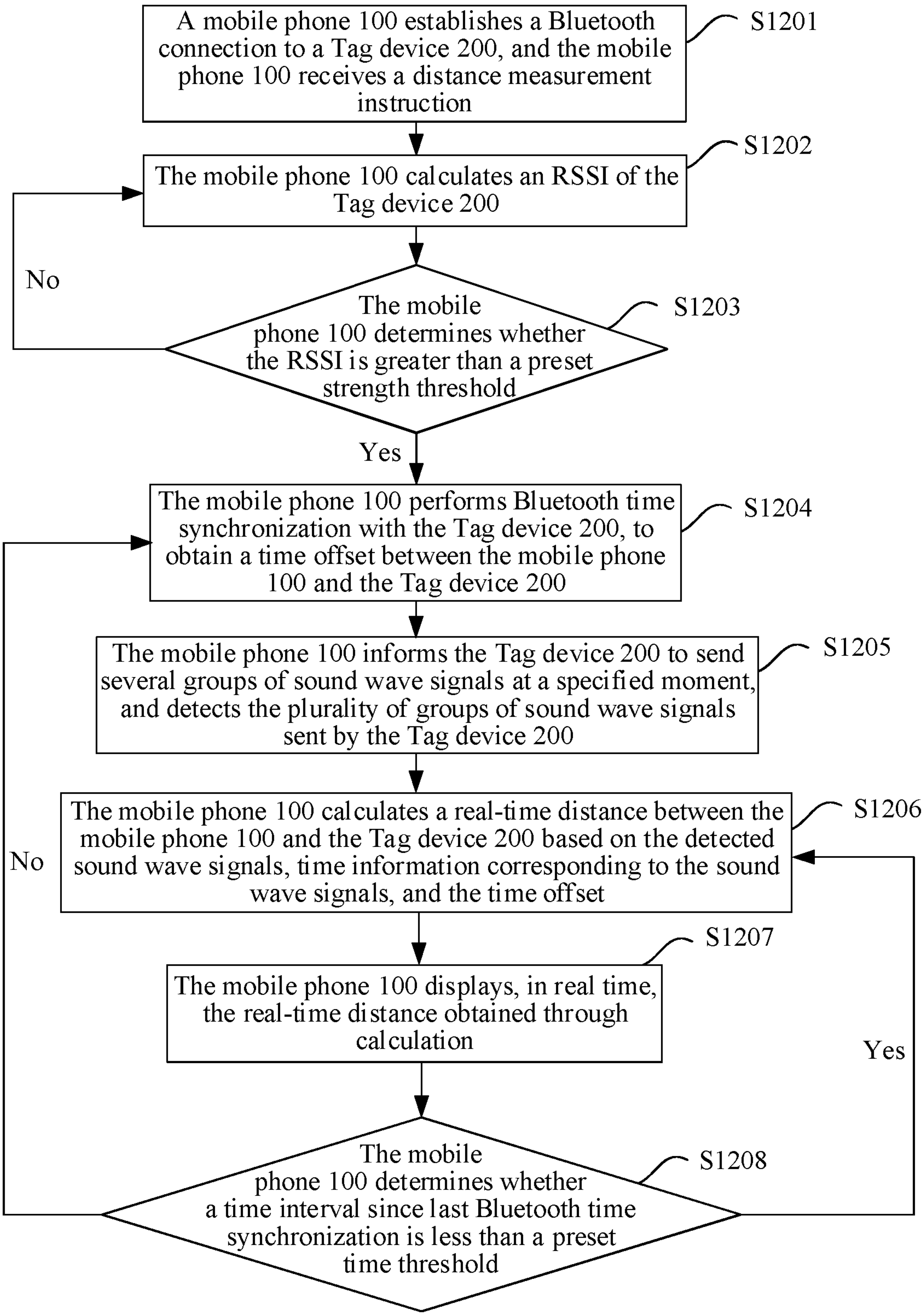
A mobile phone 100 establishes a Bluetooth connection to a Tag device 200, and the mobile phone 100 receives a distance measurement instruction
S1201
The mobile phone 100 calculates an RSSI of the Tag device 200
S1202
No
The mobile phone 100 determines whether the RSSI is greater than a preset strength threshold
S1203
Yes
The mobile phone 100 performs Bluetooth time synchronization with the Tag device 200, to obtain a time offset between the mobile phone 100 and the Tag device 200
S1204
The mobile phone 100 informs the Tag device 200 to send several groups of sound wave signals at a specified moment, and detects the plurality of groups of sound wave signals sent by the Tag device 200
S1205
The mobile phone 100 calculates a real-time distance between the mobile phone 100 and the Tag device 200 based on the detected sound wave signals, time information corresponding to the sound wave signals, and the time offset
S1206
No
The mobile phone 100 displays, in real time, the real-time distance obtained through calculation
S1207
Yes
The mobile phone 100 determines whether a time interval since last Bluetooth time synchronization is less than a preset time threshold
S1208

FIG. 12

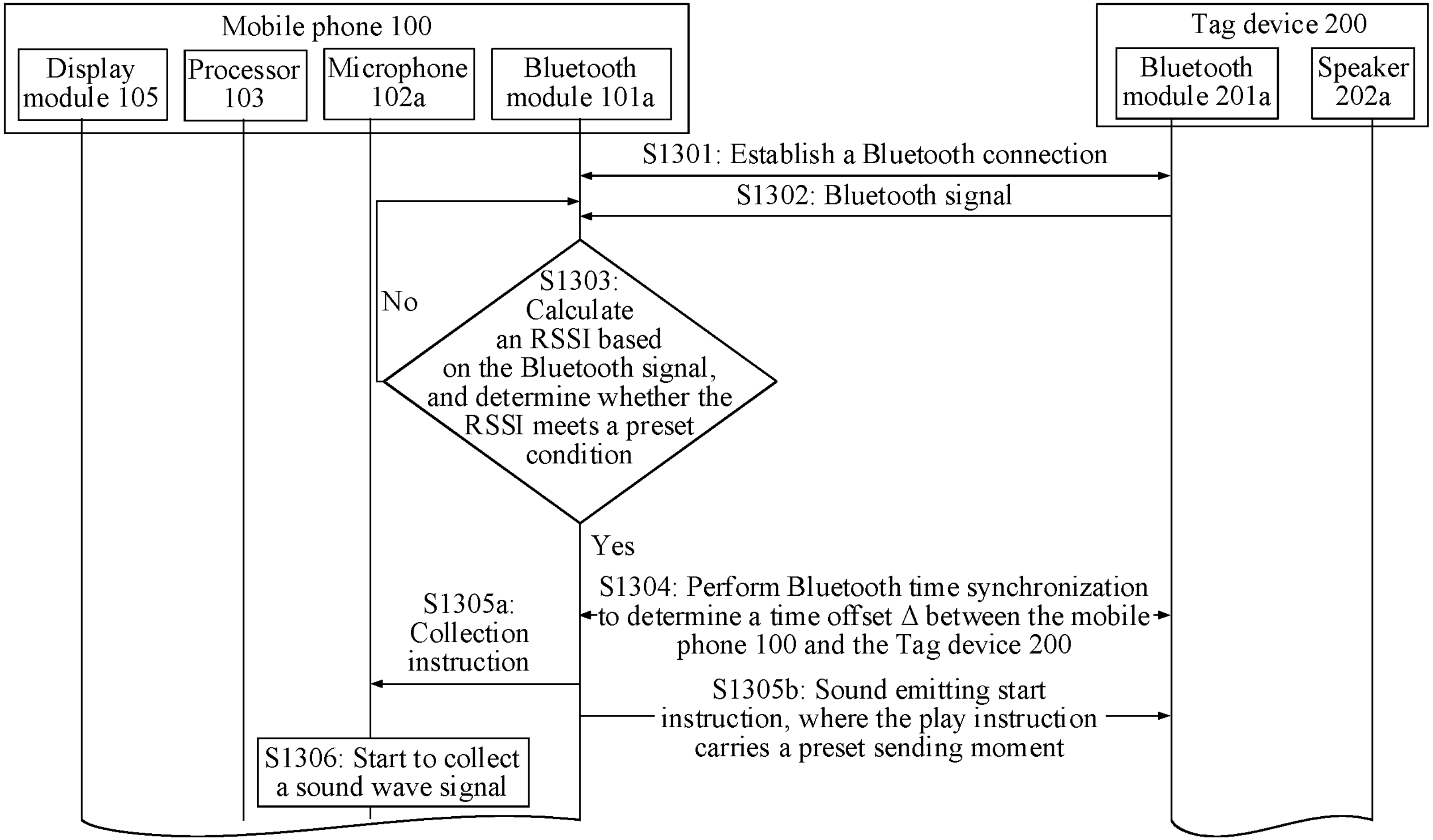


TO FIG. 13B

TO FIG. 13B

FIG. 13A

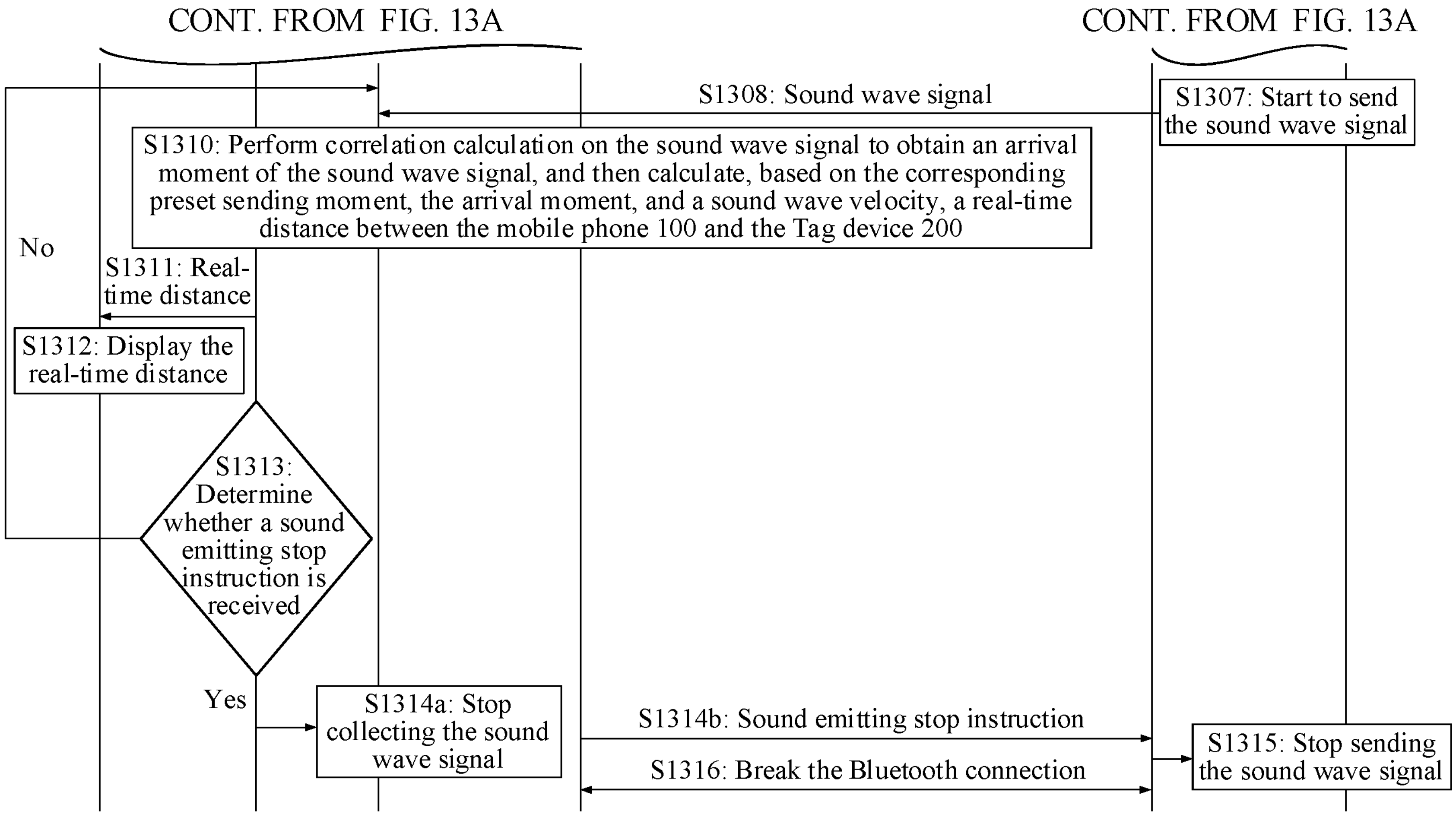
CONT. FROM FIG. 13A
CONT. FROM FIG. 13A
S1307: Start to send the sound wave signal
S1308: Sound wave signal
S1310: Perform correlation calculation on the sound wave signal to obtain an arrival moment of the sound wave signal, and then calculate, based on the corresponding preset sending moment, the arrival moment, and a sound wave velocity, a real-time distance between the mobile phone 100 and the Tag device 200
S1311: Real-time distance
S1312: Display the real-time distance
S1313: Determine whether a sound emitting stop instruction is received
No
Yes
S1314a: Stop collecting the sound wave signal
S1314b: Sound emitting stop instruction
S1315: Stop sending the sound wave signal
S1316: Break the Bluetooth connection

FIG. 13B

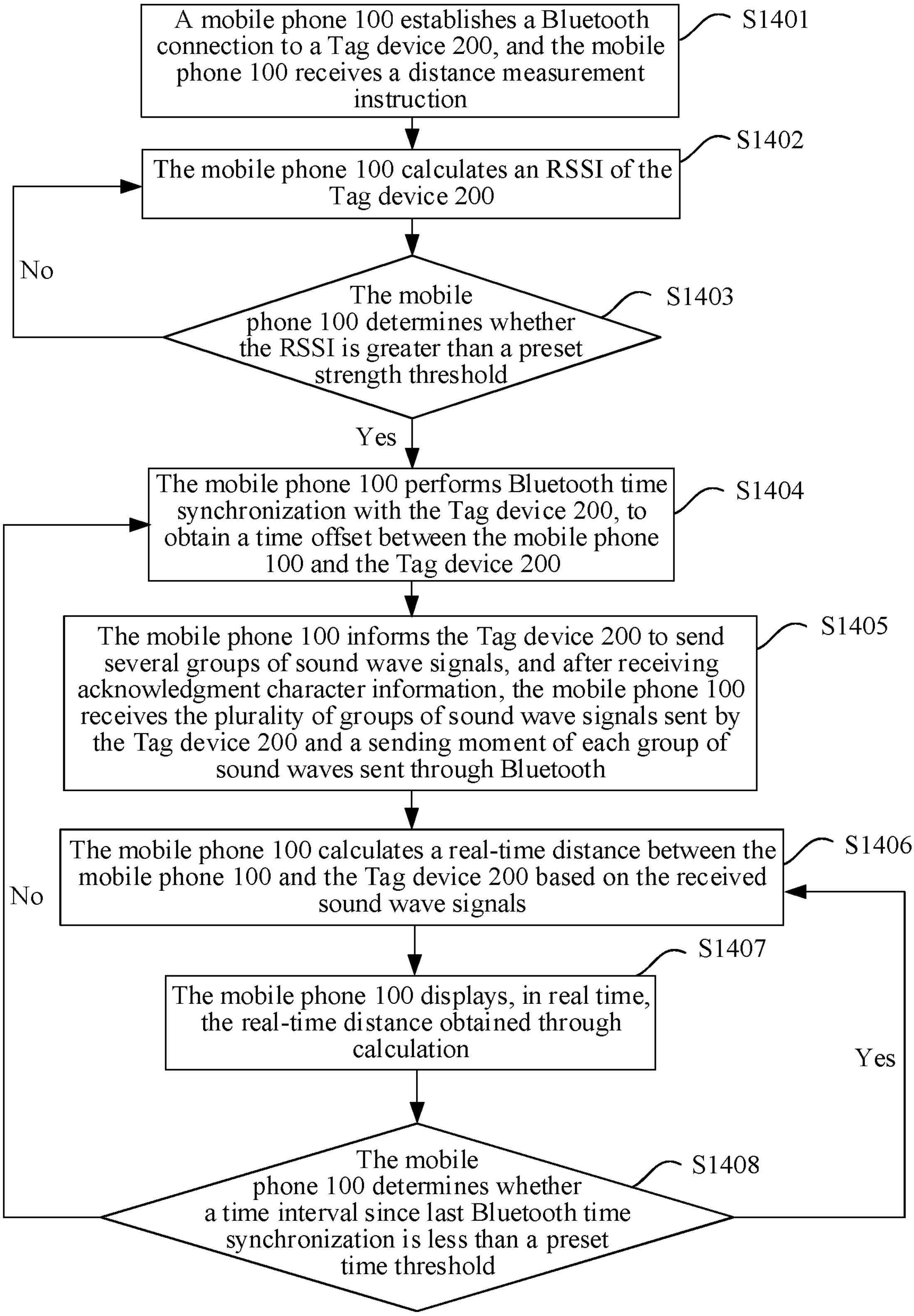
A mobile phone 100 establishes a Bluetooth connection to a Tag device 200, and the mobile phone 100 receives a distance measurement instruction
S1401
The mobile phone 100 calculates an RSSI of the Tag device 200
S1402
The mobile phone 100 determines whether the RSSI is greater than a preset strength threshold
S1403
No
Yes
The mobile phone 100 performs Bluetooth time synchronization with the Tag device 200, to obtain a time offset between the mobile phone 100 and the Tag device 200
S1404
The mobile phone 100 informs the Tag device 200 to send several groups of sound wave signals, and after receiving acknowledgment character information, the mobile phone 100 receives the plurality of groups of sound wave signals sent by the Tag device 200 and a sending moment of each group of sound waves sent through Bluetooth
S1405
The mobile phone 100 calculates a real-time distance between the mobile phone 100 and the Tag device 200 based on the received sound wave signals
S1406
The mobile phone 100 displays, in real time, the real-time distance obtained through calculation
S1407
The mobile phone 100 determines whether a time interval since last Bluetooth time synchronization is less than a preset time threshold
S1408
No
Yes

FIG. 14

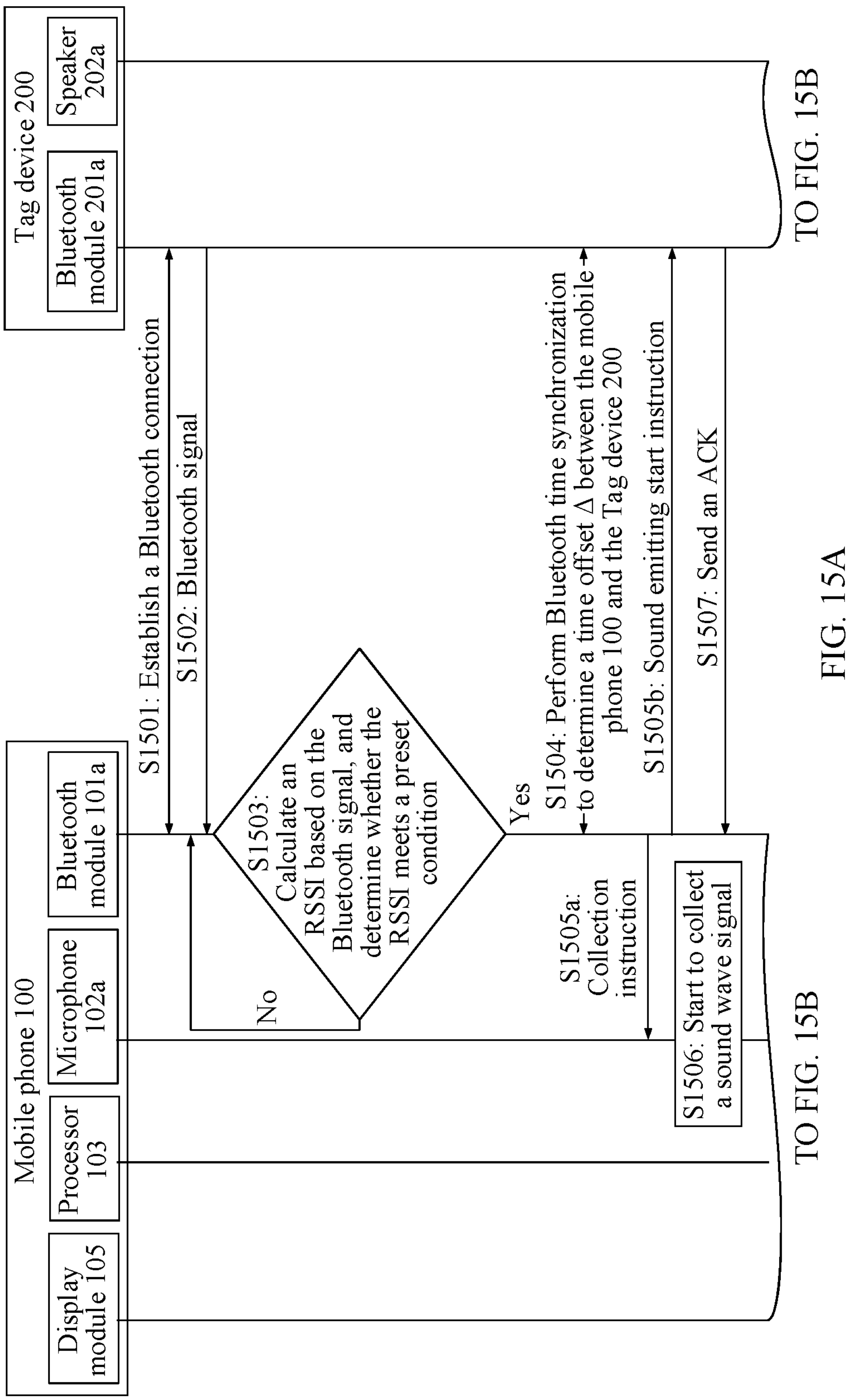
Mobile phone 100
Display module 105
Processor 103
Microphone 102a
Bluetooth module 101a
Tag device 200
Bluetooth module 201a
Speaker 202a
S1501: Establish a Bluetooth connection
S1502: Bluetooth signal
S1503: Calculate an RSSI based on the Bluetooth signal, and determine whether the RSSI meets a preset condition
No
Yes
S1504: Perform Bluetooth time synchronization to determine a time offset Δ between the mobile phone 100 and the Tag device 200
S1505a: Collection instruction
S1505b: Sound emitting start instruction
S1506: Start to collect a sound wave signal
S1507: Send an ACK
TO FIG. 15B
TO FIG. 15B

FIG. 15A

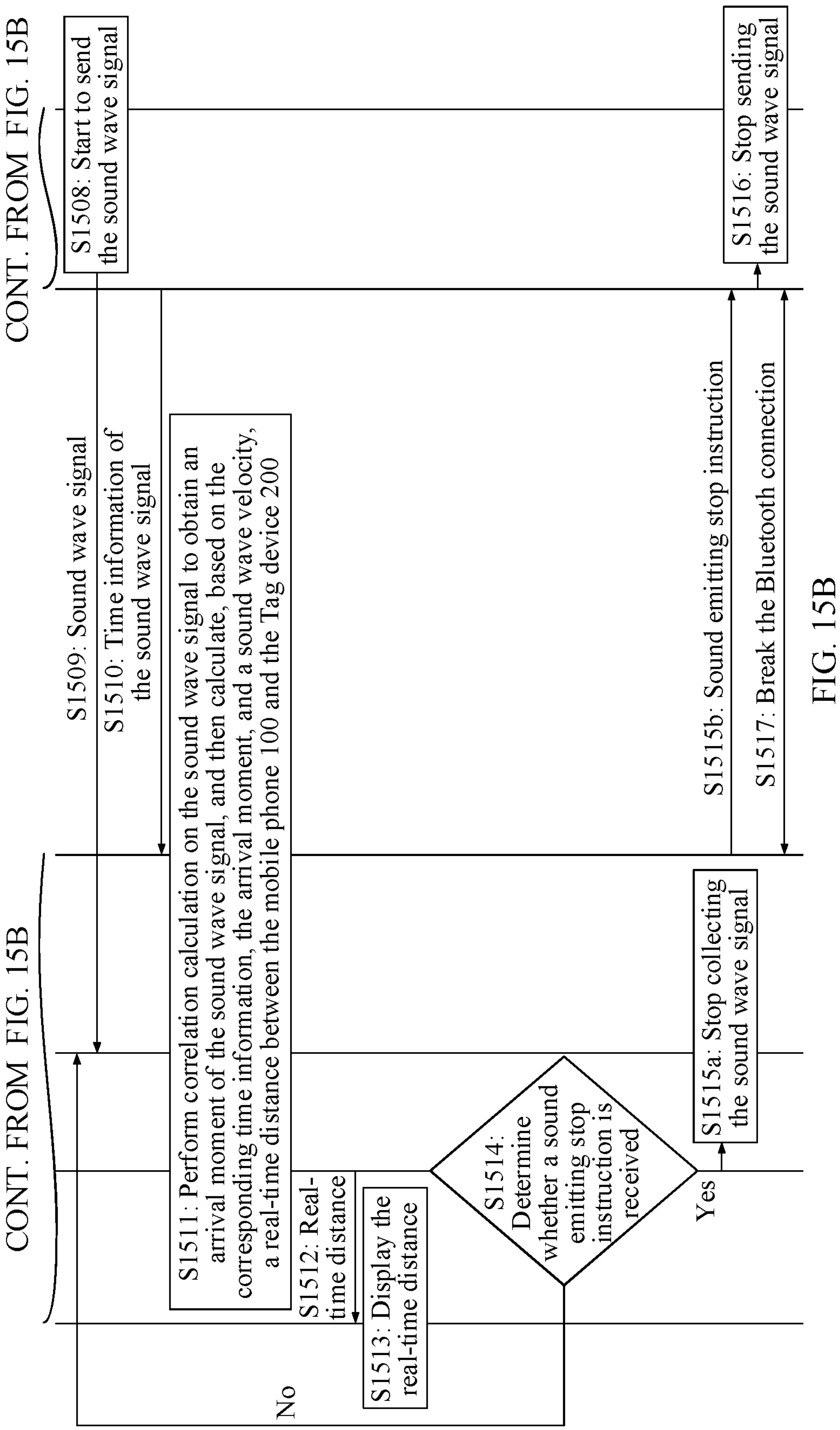
CONT. FROM FIG. 15B
CONT. FROM FIG. 15B
S1508: Start to send the sound wave signal
S1509: Sound wave signal
S1510: Time information of the sound wave signal
S1511: Perform correlation calculation on the sound wave signal to obtain an arrival moment of the sound wave signal, and then calculate, based on the corresponding time information, the arrival moment, and a sound wave velocity, a real-time distance between the mobile phone 100 and the Tag device 200
S1512: Real-time distance
S1513: Display the real-time distance
S1514: Determine whether a sound emitting stop instruction is received
No
Yes
S1515a: Stop collecting the sound wave signal
S1515b: Sound emitting stop instruction
S1516: Stop sending the sound wave signal
S1517: Break the Bluetooth connection

FIG. 15B

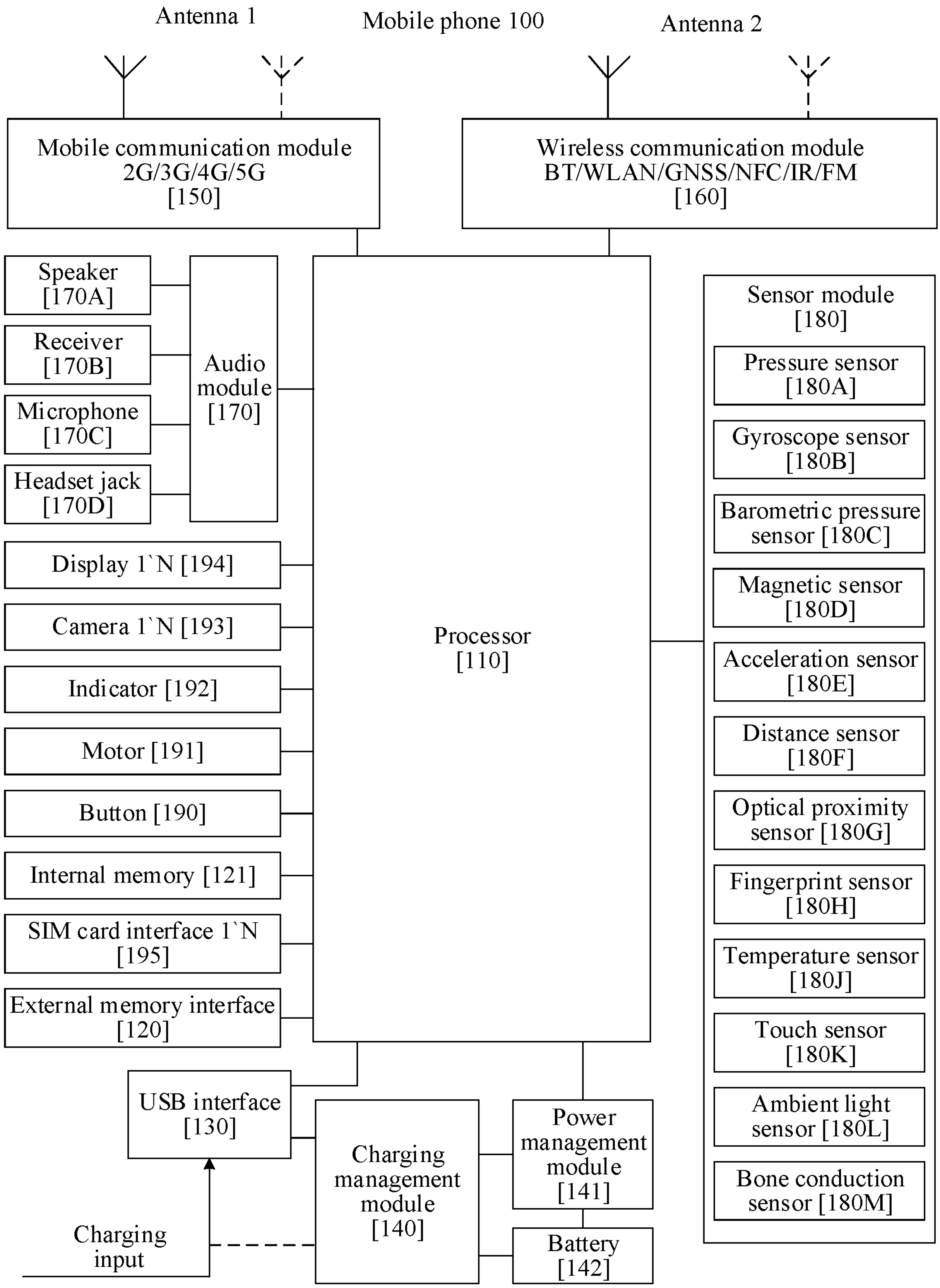
Antenna 1
Mobile phone 100
Antenna 2
Mobile communication module 2G/3G/4G/5G [150]
Wireless communication module BT/WLAN/GNSS/NFC/IR/FM [160]
Speaker [170A]
Receiver [170B]
Microphone [170C]
Headset jack [170D]
Audio module [170]
Display 1`N [194]
Camera 1`N [193]
Indicator [192]
Motor [191]
Button [190]
Internal memory [121]
SIM card interface 1`N [195]
External memory interface [120]
Processor [110]
Sensor module [180]
Pressure sensor [180A]
Gyroscope sensor [180B]
Barometric pressure sensor [180C]
Magnetic sensor [180D]
Acceleration sensor [180E]
Distance sensor [180F]
Optical proximity sensor [180G]
Fingerprint sensor [180H]
Temperature sensor [180J]
Touch sensor [180K]
Ambient light sensor [180L]
Bone conduction sensor [180M]
USB interface [130]
Charging management module [140]
Power management module [141]
Battery [142]
Charging input

FIG. 16

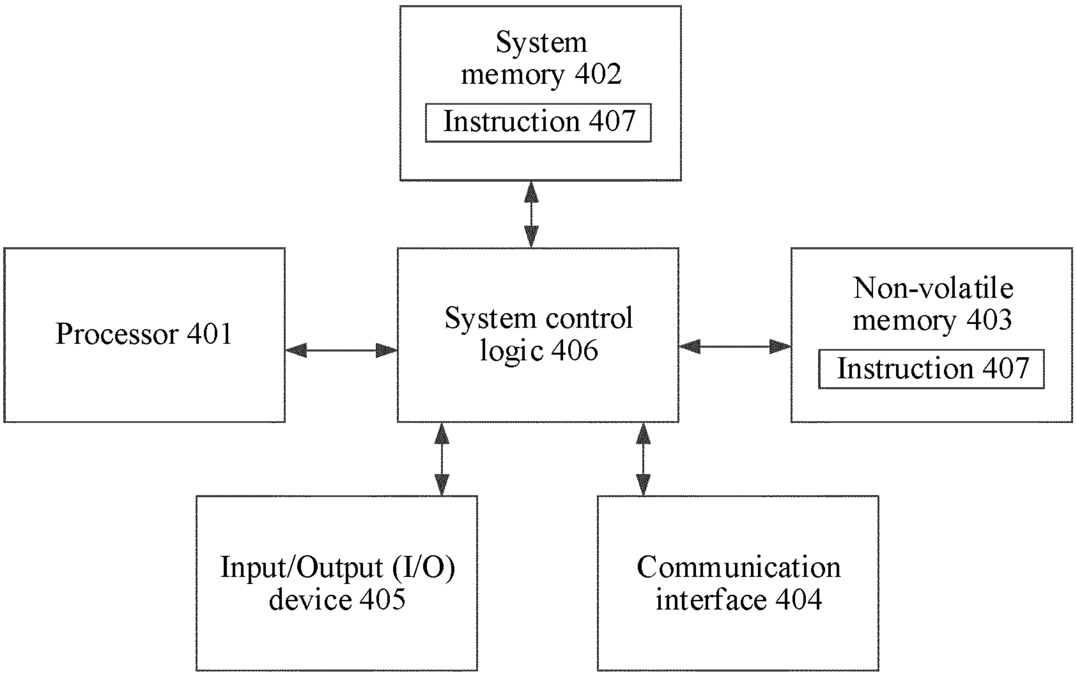
System
memory 402
Instruction 407
Processor 401
System control
logic 406
Non-volatile
memory 403
Instruction 407
Input/Output (I/O)
device 405
Communication
interface 404

FIG. 17

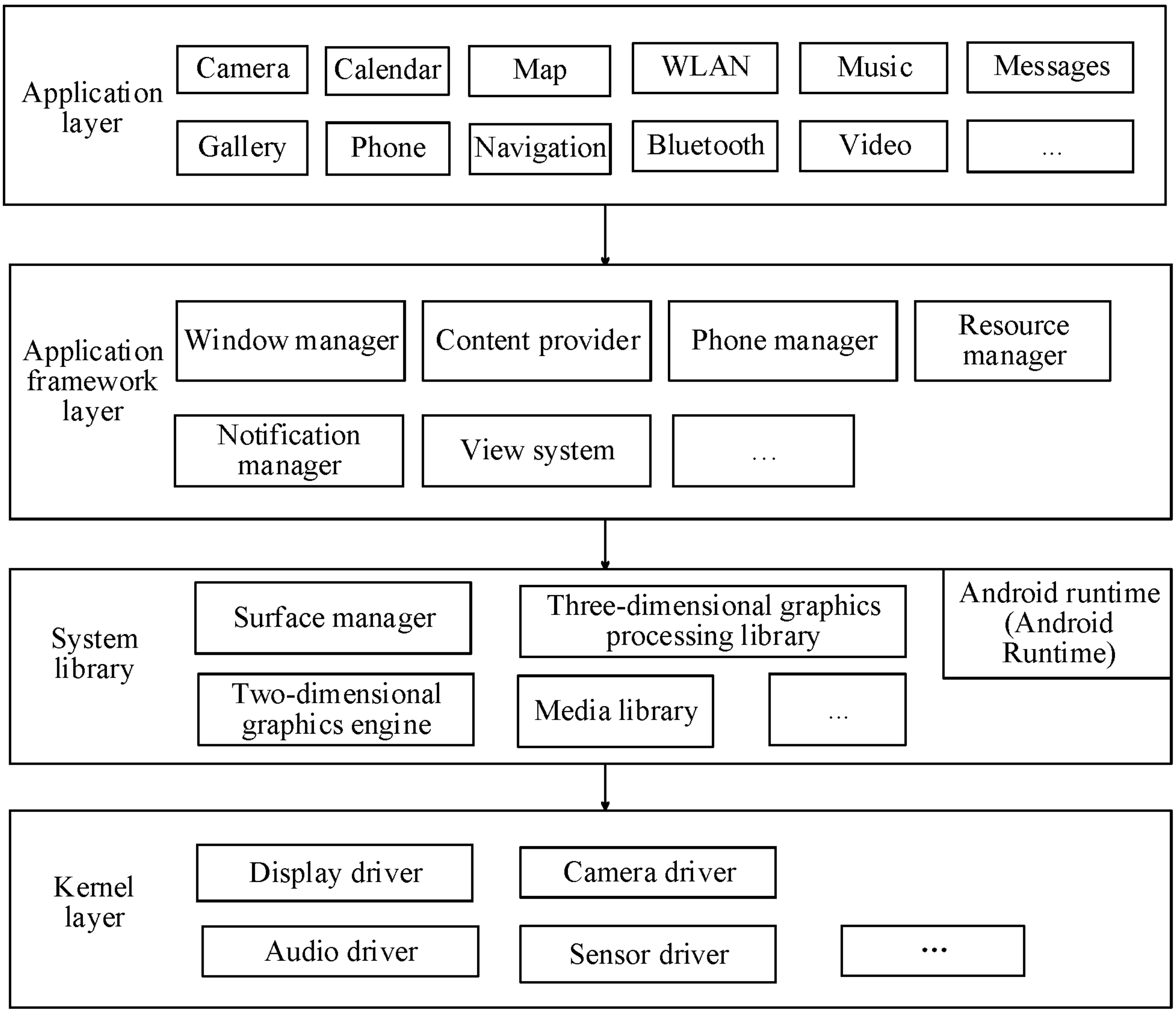
Application layer
Camera
Calendar
Map
WLAN
Music
Messages
Gallery
Phone
Navigation
Bluetooth
Video
...
Application framework layer
Window manager
Content provider
Phone manager
Resource manager
Notification manager
View system
...
System library
Surface manager
Three-dimensional graphics processing library
Android runtime (Android Runtime)
Two-dimensional graphics engine
Media library
...
Kernel layer
Display driver
Camera driver
Audio driver
Sensor driver
...

FIG. 18

**INTERNATIONAL SEARCH REPORT**

International application No.
**PCT/CN2023/075507**

**A. CLASSIFICATION OF SUBJECT MATTER**

G01S5/02(2010.01)i;G01S5/20(2006.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS; CNTXT; CNKI; 万方; 超星; VEN; USTXT; EPTXT; WOTXT; IEEE: 测距, 距离, 电子设备, 声波, 超声, 声信号, 时刻, 时间, 第一, 第二, 频率, 蓝牙, 对时, 偏移, distance, electronic devices, sound wave, input, output, time, the first, the second

**C. DOCUMENTS CONSIDERED TO BE RELEVANT**

| Category* | Citation of document, with indication, where appropriate, of the relevant passages | Relevant to claim No. |
|---|---|---|
| X | US 2016291141 A1 (SAMSUNG ELECTRONICS CO., LTD.) 2016-10-06 (2016-10-06) description, paragraphs [0471]-[0946], and figures 32-74 | 1-14 |
| A | CN 110542905 A (SHENZHEN SHUANGYING ELECTRONIC TECHNOLOGY CO., LTD.) 2019-12-06 (2019-12-06) entire document | 1-14 |
| A | CN 110045379 A (HUAWEI TECHNOLOGIES CO., LTD.) 2019-07-23 (2019-07-23) entire document | 1-14 |
| A | CN 108152677 A (WILLFAR INFORMATION TECHNOLOGY CO., LTD.) 2018-06-12 (2018-06-12) entire document | 1-14 |
| A | CN 113993077 A (HONOR TERMINAL CO., LTD.) 2022-01-28 (2022-01-28) entire document | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 April 2023** | **30 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2023/075507**

| Patent document cited in search report | Publication date (day/month/year) | Patent family member(s) | Publication date (day/month/year) |
|---|---|---|---|
| US 2016291141 A1 | 06 October 2016 | US 11079481 B2 | 03 August 2021 |
| CN 110542905 A | 06 December 2019 | None | |
| CN 110045379 A | 23 July 2019 | None | |
| CN 108152677 A | 12 June 2018 | None | |
| CN 113993077 A | 28 January 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210190807